(19) Europäisches Patentamt
European Patent Office
Office européen des brevets

(11) **EP 3 642 660 B1**

(12) **EUROPÄISCHE PATENTSCHRIFT**

(45) Veröffentlichungstag und Bekanntmachung des Hinweises auf die Patenterteilung:
**14.08.2024  Patentblatt 2024/33**

(21) Anmeldenummer: **18733248.1**

(22) Anmeldetag: **20.06.2018**

(51) Internationale Patentklassifikation (IPC):
**G02B 21/24** *(2006.01)*

(52) Gemeinsame Patentklassifikation (CPC):
**G02B 21/245**

(86) Internationale Anmeldenummer:
**PCT/EP2018/066494**

(87) Internationale Veröffentlichungsnummer:
**WO 2018/234419 (27.12.2018 Gazette 2018/52)**

(54) **VERFAHREN UND MIKROSKOPIESYSTEM ZUM AUFNEHMEN EINES BILDES**

METHOD AND MICROSCOPE SYSTEM FOR RECORDING AN IMAGE

PROCÉDÉ ET SYSTÈME DE MICROSCOPIE DESTINÉ À ENREGISTRER UNE IMAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.06.2017  EP 17001037**

(43) Veröffentlichungstag der Anmeldung:
**29.04.2020  Patentblatt 2020/18**

(73) Patentinhaber: **EUROIMMUN Medizinische Labordiagnostika AG**
**23560 Lübeck (DE)**

(72) Erfinder:
• **PANNHOFF, Helge**
**20535 Hamburg (DE)**

• **HAGEN-EGGERT, Martin**
**23568 Lübeck Schleswig-Holstein (DE)**
• **MORRIN, Markus**
**23564 Lübeck Schleswig-Holstein (DE)**
• **MÜLLER, Matthias**
**23562 Lübeck Schleswig-Holstein (DE)**
• **SUMPF, Tilman, Johannes**
**23552 Lübeck Schleswig-Holstein (DE)**

(56) Entgegenhaltungen:
| | |
|---|---|
| WO-A1-2015/197601 | WO-A1-2016/022359 |
| DE-A1- 102014 002 584 | GB-A- 2 355 354 |
| US-A1- 2008 283 723 | US-A1- 2011 309 231 |
| US-A1- 2017 090 176 | US-B1- 6 344 930 |
| US-B2- 7 433 129 | |

## Beschreibung

Die vorliegende Erfindung betrifft ein Verfahren zum Aufnehmen eines Bildes eines Probenbereichs, insbesondere zum Aufnehmen eines Fluoreszenzbildes, und betrifft ferner ein Mikroskopiesystem zum Aufnehmen eines Bildes eines Probenbereichs.

DE 10 2008 015 885 A1 beschreibt ein Verfahren zur Autofokussierung von optischen Geräten, wobei eine Messlichtquelle und ein Objektiv zur Abbildung eines von der Messlichtquelle ausgehenden im Wesentlichen parallelen Strahlenbündels auf ein Beobachtungsobjekt zur Erzeugung eines Reflexionsbildes vorgesehen sind, wobei weiterhin eine Auswerte- und Einstelleinheit vorgesehen ist, welche geeignet ist, aus dem Reflexionsbild die Fokuslage zu ermitteln und das Objektiv zu positionieren. Dabei wird ein Bild mit konzentrischen Ringen aufgenommen, deren Durchmesser sich in Abhängigkeit von dem Abstand zu der korrekten Fokusposition ändert.

WO 2016/133787 A1 offenbart Verfahren und Systeme zum automatischen Fokussieren eines Mikroskops an einer Probe und zum Aufnehmen eines fokussierten Bildes der Probe. Die aufgenommenen Messungen werden analysiert, um zu bestimmen, welche Messung einen Peak aufweist, wobei als Peakwert eine Messung von einem reflektierten Laserstrahl verstanden ist, welcher eine maximale Intensität als eine Funktion der Position des Substrats entlang der optischen Achse des Mikroskops in Bezug auf die Position der Objektivlinse bedeutet.

DE 10 2014 002 584 offenbart ein Verfahren und eine Optikvorrichtung zur Abbildung eines innerhalb eines dreidimensionalen Probenbereichs befindlichen Objekts, wobei ein Tiefenprofil des Probenbereichs mittels optischer Kohärenz-Interferometrie ermittelt wird, ein Peak in dem Tiefenprofil erkannt wird, der von einer Reflexion an einem Objektpunkt herrührt, eine optische-Weglänge-Position des Peaks bestimmt wird und wobei eine geometrische-Weglänge-Position des Objektpunktes basierend darauf berechnet wird. Schließlich wird das Mikroskop basierend auf der geometrische-Weglänge-Position zum Abbilden des Objektes fokussiert.

Konventionell sind Mikroskopbilder an verschiedenen Tiefenpositionen (Z-Positionen) aufgenommen worden, wobei die optimale Fokusposition über eine Auswertung der Strukturschärfe der Bildaufnahmen bestimmt wurde. Dieses Verfahren ist jedoch relativ zeitraubend, so dass eine Hochdurchsatz-Abarbeitung einer Vielzahl von Proben erschwert ist.

Bei Lösungen aus dem Stand der Technik wie der US20170090176 A1 werden mitunter flächig ausgedehnte Muster auf eine Ebene wie eine reflektierende Grenzfläche projiziert, wobei dann das reflektierte Muster mittels einer Bilderfassungseinheit in einem virtuellen Maskenbereich pixelweise ausgewertet wird und mittels einer Zusammenführung der Intensitätswerte mehrerer Pixel innerhalb der virtuellen Maske ein Maß für die Fokussierung zwischen Objektiv und Grenzfläche bzw. Probenbereich abgeleitet wird.

Die Verfahren und Systeme des Standes der Technik können somit nicht unter allen Bedingungen eine schnelle und zuverlässige Fokussierung von Proben in der Mikroskopie, insbesondere Fluoreszenzmikroskopie, gewährleisten.

Daher gibt es einen Bedarf für ein Verfahren und ein Mikroskopiesystem zum Aufnehmen eines Bildes eines Probenbereichs, wobei eine schnelle und zuverlässige Fokussierung, insbesondere eines in einem dreidimensionalen Probenbereich eingebetteten Objekts, gewährleistet werden kann.

Der Bedarf wird durch die Gegenstände der unabhängigen Ansprüche befriedigt, welche auf ein Verfahren bzw. auf ein Mikroskopiesystem zum Aufnehmen eines Bildes eines Probenbereichs gerichtet sind. Die abhängigen Ansprüche spezifizieren besondere Ausführungsformen der vorliegenden Erfindung.

Gemäß einer nicht erfindungsgemäßen Ausführungsform ist bereitgestellt ein Verfahren zum Aufnehmen eines Bildes eines Probenbereichs, aufweisend: Richten eines Laserstrahls mittels wenigstens eines Objektivs auf den Probenbereich, der mindestens eine Grenzfläche, enthält, wobei das Objektiv eine Abbildung des Laserstrahls auf einen Fokussierungspunkt bewirkt, welcher in einer Fokussierungsebene liegt, wobei die Fokussierungsebene parallel zur Brennebene liegt und insbesondere mit der Brennebene zusammenfällt, wobei der Fokussierungspunkt vorzugsweise auf der optischen Achse des Objektivs oder einer dazu parallelen Achse liegt, wobei die Fokussierungsebene ferner vorzugsweise senkrecht zur optischen Achse des Objektives steht; relatives Verfahren des Objektivs und des Probenbereichs zueinander entlang der optischen Achse des Objektivs an mehrere, unterschiedliche Relativverfahrpositionen; Erfassen, für eine jeweilige Relativverfahrposition, von mehreren Intensitätswerten des an der Grenzfläche reflektierten und durch das Objektiv tretenden Laserstrahls, die von Pixeln eines zweidimensionalen Teilbereichs einer Detektionsfläche einer Mikroskopkamera detektiert werden; Bestimmen, für eine jeweilige Relativverfahrposition, eines jeweils höchsten Intensitätswertes der jeweils mehreren, erfassten Intensitätswerte des Teilbereichs; Bestimmen eines Verlaufs der höchsten Intensitätswerte durch Zuordnen des jeweils höchsten Intensitätswertes zu der jeweiligen Relativverfahrposition; Bestimmen einer Bezugsrelativverfahrposition aus mindestens einem lokalen Maximum des Verlaufs der höchsten Intensitätswerte und vorzugsweise Anfahren der Bezugsrelativverfahrposition; Erfassen wenigstens eines Bildes des Probenbereichs an der Bezugsrelativverfahrposition vorzugsweise mittels Auslesen der Detektorfläche der Mikroskopkamera oder einer Detektorfläche einer weiteren Mikroskopkamera.

Um einen oder mehrere Vorteile des erfindungsgemäßen Verfahrens und der erfindungsgemäßen Vorrichtung dem Leser nahezubringen erfolgen hierzu nun genauere Ausführungen.

Das Objektiv ist so ausgebildet, dass es Laserstrahlen, welche parallel zueinander als ein paralleler Strahlengang bzw. ein kollimiertes, paralleles Strahlenbündel in seine optische Öffnung hin zu der Laserlichtquelle eintreten, auf einen Punkt einer Brennebene des Objektivs auf der anderen Seite des Objektivs projiziert, wobei der Punkt erfindungsgemäß nicht der Brennpunkt sein kann sondern ein zu dem Brennpunkt in der Brennebene versetzter Punkt, falls das Strahlenbündel nicht genau zu der optischen Achse des Objektivs symmetrisch zentriert ist. Laserstrahlen, welche von dem genau diesem Punkt aus, insbesondere dem Brennpunkt, in der Brennebene aus zurück in das Objektiv eintreten, werden wiederum auf der Öffnungsseite bzw. der optischen Seite hin zu der Laserquelle bzw. der Mikroskopkamera zu einem parallelen Strahlengang geformt.

Ist also zum Beispiel der Laserstrahl ein kollimiertes, paralleles Strahlenbündel, so erzeugt das Objektiv eine Projektion des Laserstrahls in seiner gesamten Intensität auf den einen Punkt, insbesondere den Brennpunkt, in der Brennebene des Objektivs. Der durch das Objektiv von diesem Punkt, insbesondere diesem Brennpunkt, her aufgefangene Strahlengang, welcher auf der anderen Seite des Objektives zu einem parallelen, kollimierten Strahlengang gebündelt wird, kann dann mittels einer dem Objektiv nachgeschalteten Linse, vorzugsweise einer Tubuslinse, auf einen Abbildungspunkt projiziert werden, an welchem die Detektionsfläche bzw. die Mikroskopkamera angeordnet ist.

In dem nicht erfindungsgemäßen Fall, dass der Laserstrahl ein paralleler, kombinierter Strahlengang ist, wird dann also der Laserstrahl durch das Objektiv auf den einen Punkt der Brennebene projiziert, wobei der der Punkt der Brennpunkt sein kann oder ein zu dem Brennpunkt in der Brennebene versetzter Punkt. Hierdurch liegt eine maximale optische Intensität des Laserstrahls an diesem Punkt in der Brennebene vor. Es fallen dann in diesem Fall bzw. diesem Beispiel die Fokussierungsebene und die Brennebene zusammen. Befindet sich durch Verändern der Relativverfahrposition die Grenzfläche des Probenbereiches an genau der Brennebene, so erfolgt eine Reflexion des auf den Punkt der Brennebene projizierten Laserstrahls zurück zum Objektiv, wobei das Objektiv und die Tubuslinse dann eine Abbildung dieser Reflexion auf die Detektorfläche bzw. Mikroskopkamera bewirken. Es wird sich also dann zumindest ein Pixel bzw. eine geringe Anzahl an Pixeln mit einer besonderen hohen Intensität in dem Teilbereich der Detektorfläche befinden. Dadurch kann dann in dem Teilbereich in besonders vorteilhafter Weise einfach auf den höchsten Intensitätswert innerhalb des Teilbereiches abgestellt werden, um ein Maß für die Fokussierung des Probenbereiches zu erhalten. Es bedarf also aufgrund der hier beschriebenen Verwendung des Laserstrahls keiner weiteren Verarbeitung oder Filterung der mitunter vielen Intensitätswerte des Teilbereiches, sondern es muss lediglich festgestellt werden, welches der an der entsprechenden Relativverfahrposition entsprechende höchste Intensitätswert innerhalb des Teilbereiches ist. Hierbei ist es nicht erheblich, welches Pixel den Maximalwert der Intensitätswerte detektiert hat, so dass das Verfahren besonders schnell ist. Wird der Probenbereich gegenüber dem Objektiv weiter verfahren in eine andere Relativverfahrposition, so erfolgt eine Reflexion des Laserstrahls nicht an einem einzelnen Punkt, welches vorher der Punkt in der Brennebene und insbesondere der Brennpunkt war, sondern die Reflexion erfolgt in einem flächigen Bereich des Probenbereiches bzw. der Grenzfläche. Hierdurch wird also dann die optische Intensität des Laserstrahls über einen größeren Bereich des Teilbereichs verteilt als dies der Fall ist, als wenn der Laserstrahl nur in dem einen einzigen Punkt der Brennebene reflektiert wird. Daher ergeben sich dann auch innerhalb des Teilbereiches auf der Detektorfläche bzw. der Mikroskopkamera Intensitätswerte, welche in Summe zwar noch die gesamte optische Intensität des Laserstrahls repräsentieren bzw. repräsentieren können, wobei aber der nun höchste Intensitätswert eben auch geringer ist als der höchste Intensitätswert in jener Konfiguration, bei welcher der Laserstrahl mittels der Grenzfläche genau in dem einen Punkt der Brennebene reflektiert wird. Es muss also durch Auswertung des Teilbereiches bzw. dessen Pixel nicht auf eine genaue Herausfilterung eines reflektierten Musters z.B. mittels einer Blende abgestellt werden, sondern die Auswertung des höchsten Intensitätswertes für eine jeweilige Relativverfahrposition erlaubt eine besonders einfache und schnelle Fokussierung bzw. Bestimmung der Bezugsrelativverfahrposition mit einer besonders hohen Ortsauflösung. In dem Fall, dass mehrere Grenzflächen vorhanden sind, kann mittels des Verlaufs der höchsten Intensitätswerte dann beispielsweise eine dritte Grenzfläche detektiert werden, um eine Bezugsrelativverfahrposition zu ermitteln. Es kann also somit die Empfindlichkeit des Verfahrens erhöht werden und eine Ausdehnung des abgebildeten Laserstrahls in der Tiefenrichtung kann im Wesentlichen einer Tiefenschärfe der Optik gleichen.

In dem erfindungsgemäßen Fall, dass der Laserstrahl von der Laserlichtquelle hin zu der Öffnung des Objektivs konvergiert, ergibt sich eine Fokussierung des Laserstrahls auf einen Fokussierungspunkt in einer Fokussierungsebene, welche nicht mit der Brennebene des Objektivs zusammenfällt aber parallel zu ihr liegt; die Fokussierungsebene verläuft hierbei senkrecht zur optischen Achse des Objektivs. Wird dann eine Reflexion des Laserstrahl an einer Grenzfläche in der zuvor beschriebenen Art und Weise mittels Betrachtung des höchsten Intensitätswertes des Teilbereiches detektiert, so befindet sich dann die Grenzfläche zwar in der Fokussierungsebene aber nicht in der Brennebene des Objektives sondern insbesondere etwas näher hin zum Objektiv als die Fokussierungsebene. Ist dieser Versatz zwischen der Fokussierungsebene und der Brennebene bekannt, da der Konvergenzwinkel des Laserstrahls vor Eintritt in das Objektiv bekannt ist, so kann dann dieser Versatz als ein gespeicherter bzw. vorgegebener Wert verwendet werden, um eine finale Fokussierung des Probenbereiches hin zu der Brennebene herbeizuführen. Dieses kann insbesondere dann vorteilhaft sein, wenn erfindungsgemäß zunächst in einer ersten, gröberen Abstandsauflösung anhand mehrerer Maxima des Verlaufs der höchsten Intensitätswerte eine Bezugsrelativverfahrposition geschätzt wird und wenn dann nach einer Richtungsumkehr des relativen Verfahrens das Objektiv und Probenbereich noch einmal in einer zweiten, feineren Abstandsauflösung relativ zueinander positioniert bzw. verfahren werden. Wird während dieses zweiten Verfahrens mit der höheren Abstandsauflösung abermals das entscheidende Maximum des Verlaufs detektiert, so kann ein Vorliegen des Maximums mit genauer Präzision erst während des zweiten Verfahrens detektiert werden, wenn zumindest zwei aufeinander folgende höchste Intensitätswerte eine negative erste Ableitung in der aktuellen Verfahrrichtung indizieren. Es kann erfindungsgemäß dann der zuvor beschriebene und bekannte optische Versatz zwischen der Fokussierungsebene und der Brennebene genutzt werden, um eine endgültige Ausrichtung des Probenbereiches gegenüber dem Objektiv für eine tatsächliche Fokussierung des Probenreiches in der Brennebene herbeizuführen, ohne dass es einer Richtungsumkehr während des Relativverfahrens benötigt. Bei einer Richtungsumkehr während des Relativverfahrens können sich Ausrichtungstoleranzen von mechanischen Führungselementen des Objektivs und/oder des Probenbereiches derart auswirken, dass die eigentlich erwünschte Relativposition zwischen Objektiv und Probenbereich verfälscht wird. Solche Ausrichtungstoleranzen werden mitunter auch als Umkehrspiel der Mechanik bezeichnet. Mittels der hier beschriebenen Variante mit einem Auseinanderfallen der Fokussierungsebene und der Brennebene kann auf die genannte Richtungsumkehr verzichtet werden, um somit eine negative Auswirkung von Ausrichtungstoleranzen zu vermeiden.

Gemäß einer nicht erfindungsgemäßen Ausführungsform weist der Laserstrahl ein kollimiertes, paralleles Strahlenbündel auf, wobei die Fokussierungsebene des Laserstrahls mit der Brennebene des Objektivs zusammenfällt. Insbesondere fällt vorzugsweise der Fokussierungspunkt mit dem Brennpunkt des Objektivs zusammen. Insbesondere ist ein Querschnittsdurchmesser des Laserstrahls im Wesentlichen gleich der Apertur des Objektivs.

Im Sinne dieser Anmeldung kann der Begriff Brennebene auch als der Begriff Brennweitenebene bezeichnet werden.

Gemäß einer erfindungsgemäßen Ausführungsform weist das vorgeschlagene Verfahren ferner die Schritte auf:

Relatives Verfahren des Objektivs und des Probenbereichs zueinander mittels Verringern eines Relativabstandes zwischen dem Objektiv und dem Probenbereich ausgehend von einem größten Abstand hin zu einem kleinsten Abstand unter Verwendung einer ersten Abstandsauflösung, sodass der Verlauf mehrere Maxima aufweist; Bestimmen der Bezugsrelativverfahrposition auf Basis der mehreren Maxima als eine erste Bezugsrelativverfahrensposition; Vergrößern des Relativabstandes hin zu der ersten Bezugsrelativverfahrensposition mit einer zweiten Abstandsauflösung, welche höher ist als die erste Abstandsauflösung, bei gleichzeitigem Erfassen von weiteren höchsten Intensitätswerten an den jeweiligen, weiteren Relativverfahrenspositionen; Detektieren eines Vorliegens eines lokalen Maximums auf Basis der weiteren höchsten Intensitätswerte.

Gemäß einer nicht erfindungsgemäßen Ausführungsform weist der Laserstrahl ein zum Objektiv hin kollimiertes, paralleles Strahlenbündel auf, wobei ferner die Fokussierungsebene des Laserstrahls mit der Brennebene des Objektivs zusammenfällt. Hierbei erfolgt dann ein Einstellen jener Relativverfahrposition als eine finale Bezugsrelativverfahrensposition, an welcher das auf Basis der weiteren höchsten Intensitätswerte detektierte lokale Maximum vorliegt bzw. vorlag.

Gemäß einer erfindungsgemäßen Ausführungsform weist der Laserstrahl ein zum Objektiv hin konvergentes Strahlenbündel auf, wobei ferner die Fokussierungsebene des Laserstrahls nicht mit der Brennebene des Objektivs zusammenfällt. Hierbei erfolgt dann ein abermaliges Vergrößern des Relativabstandes um einen vorbestimmten Vorgabewert an eine finale Bezugsrelativverfahrposition. Die Fokussierungsebene fällt also in dieser Ausführungsform nicht mit der Brennebene des Objektivs zusammenfällt aber liegt parallel zu ihr, wobei die Fokussierungsebene senkrecht zur optischen Achse verläuft.

Vor dem Auslesen der Pixel der Detektionsfläche der einen oder der weiteren Mikroskopkamera kann die Quelle des Laserstrahls deaktiviert werden und es kann eine Fluoreszenzlichtquelle zur Anregung einer Fluoreszenzstrahlung der Probe aktiviert werden. Der Laserstrahl kann elektromagnetische Strahlung im sichtbaren und/oder unsichtbaren Wellenlängenbereich (z.B. Infrarot, Ultraviolett) umfassen.

Das Verfahren kann mit einem Mikroskopiesystem gemäß einer Ausführungsform der vorliegenden Erfindung durchgeführt werden.

Bei dem Probenbereich kann es sich um einen in drei Dimensionen ausgedehnten Probenbereich handeln, welcher somit in zwei lateralen Richtungen ausgedehnt ist sowie in einer dazu senkrechten Tiefenrichtung ausgedehnt ist. Insbesondere kann innerhalb des Probenbereichs in einer bestimmten Tiefe eine (biologische) Probe befindlich sein, von welcher ein fokussiertes Bild, insbesondere Fluoreszenzbild, aufzunehmen ist. Das Verfahren (und das Mikroskopiesystem) kann somit insbesondere in der Autoimmundiagnostik zur Evaluierung von Immunfluoreszenz-Präparaten eingesetzt werden. Insbesondere können das Verfahren und das Mikroskopiesystem einen indirekten Immunfluoreszenz-Test (IIFT) unterstützen. Das Verfahren kann eine rasche Abarbeitung der zu befundenen Proben sicherstellen, was eine schnelle Fokussierung der Proben erfordert.

Das Objektiv kann eine oder mehrere Linsen umfassen, welche hintereinander entlang der optischen Achse des Objektivs angeordnet sein können. Das Objektiv kann zum Beispiel eine 10-fache, 20-fache oder zum Beispiel 40-fache Vergrößerung bereitstellen und beispielhaft eine numerische Apertur von zwischen 0,3 und 0,8 aufweisen. Das letztendlich für eine Aufnahme des Bildes herangezogene von dem Probenbereich ausgehende Licht kann sichtbares Licht umfassen, zum Beispiel grünes Licht, rotes Licht und/oder blaues Licht und kann insbesondere durch Fluoreszenzemission nach Fluoreszenzanregung aus dem Probenbereich ausgesendet worden sein.

Der (Tiefen-)Bereich, in dem die Probe in der Objektebene des Mikroskops scharf abgebildet wird, die sogenannte Schärfentiefe, ist dabei abhängig von der numerischen Apertur NA des Objektivs. Dabei besteht zwischen der Schärfentiefe $t_w$, der Schwerpunktswellenlänge $\lambda_0$ des abzubildenden Lichtspektrums und der numerischen Apertur NA der folgende Zusammenhang:

$$t_w = \lambda_0/NA^2$$

Die Schärfentiefe kann zum Beispiel zwischen 500 nm und 6000 nm, insbesondere zwischen 700 nm und 1100 nm, liegen. Ausführungsformen der vorliegenden Erfindung können die Bezugsrelativverfahrposition mit einer Genauigkeit bestimmen, welche im Wesentlichen der Schärfentiefe des Objektivs gleicht. Damit kann eine zuverlässige Fokussierung gewährleistet werden.

Zum relativen Verfahren des Objektivs und des Probenbereichs kann das Objektiv und/oder der Probenbereich verfahren werden. Dabei wird der Abstand zwischen Objektiv und Probenbereich variiert, es erfolgt eine Relativbewegung zwischen Objektiv und Probenbereich. Dieses Verfahren kann über eine Ansteuerung eines Antriebsmittels durch einen Prozessor erfolgen, wobei das Antriebsmittel das Objektiv und/oder den Probenbereich in seiner Position ändert bzw. verfährt.

Zum relativen Verfahren (bzw. Bewegen entlang der z-Richtung, d.h. der Tiefenrichtung) des Objektivs und des Probenbereichs kann der Probenbereich z. B. relativ zu einem feststehenden Objektiv bewegt werden oder das Objektiv kann relativ zu einem feststehenden Probenbereich (in Z-Richtung, das heißt Tiefenrichtung) bewegt werden.

Ein verwendeter Laser kann zum Beispiel ein Emissionsspektrum im sichtbaren roten Wellenlängenbereich aufweisen. Insbesondere kann dieser Laserstrahl Wellenlängen aufweisen, welche mit Wellenlängen überlappen, welche zum Aufnehmen des Bildes des Probenbereichs vorgesehen sind. Zum Beispiel kann die Wellenlänge des Laserstrahls mit einem Emissionsspektrum überlappen, welches in der Fluoreszenzmikroskopie detektiert wird. Somit ist vorzugsweise lediglich eine (einzige) Mikroskopkamera erforderlich, um einerseits eine Fokussierung und andererseits die beabsichtigte Aufnahme des Bildes zu unterstützen. Der Laserstrahl kann zum Beispiel mithilfe eines Strahlteilers in den Strahlengang des Objektivs eingekoppelt werden. Eine Querschnittsausdehnung des Laserstrahls kann vorzugsweise im Wesentlichen gleich einem Durchmesser des Eintrittsbereichs (bzw. der Apertur oder der Pupillenöffnung) des Objektivs gleichen.

Die mindestens eine Grenzfläche kann zum Beispiel eine ebene Grenzfläche sein, zum Beispiel zwischen einem festen Material und Luft, zwischen einem festen Material und einer Flüssigkeit oder zwischen einem festen Material und einer (organischen) Probe. Das Vorhandensein der mindestens einen Grenzfläche kann eine Fokussierung erleichtern bzw. eine Zuverlässigkeit der Fokussierung erhöhen.

Die Mikroskopkamera oder eine weitere Mikroskopkamera kann konventionell zum Aufnehmen des Bildes vorgesehen sein, wobei das Bild durch die Gesamtheit der Intensitätswerte der Pixel der Detektionsfläche der Mikroskopkamera gebildet sein kann. Zur Fokussierung - und insbesondere zur Bestimmung der Bezugsrelativverfahrposition - werden jedoch nur Pixel eines zweidimensionalen Teilbereichs der gesamten Detektionsfläche der Mikroskopkamera benötigt bzw. ausgelesen, ohne zeitaufwendig die restlichen Pixel der Detektionsfläche außerhalb des Teilbereichs auslesen zu müssen. Dadurch kann das Verfahren beschleunigt werden. Der zweidimensionale Teilbereich kann zum Beispiel eine Größe haben, die 16 x 16 Pixel bei einer bevorzugten Detektorfläche von 2440 x 2048 Pixeln beträgt, welches insbesondere ca. 0,005% der Detektorfläche entspricht.

In verschiedenen Richtungen von einem Punkt, insbesondere dem Brennpunkt, der objektseitigen Brennebene des Objektivs ausgehende Laserstrahlen werden durch das Objektiv zu parallelen Strahlen gebrochen, so dass aus Sicht der Brennebene hinter (bzw. lichtstromabwärts) dem Objektiv ein paralleles Strahlenbündel vorliegt. Eine dem Objektiv nachgeschaltete Linse (wie zum Beispiel eine Tubuslinse) sammelt die parallelen Strahlen in einer bildseitigen Brennebene dieser weiteren Linse in einem Punkt. Dabei liegt die Detektionsfläche der Mikroskopkamera in der bildseitigen Brennebene dieser weiteren Linse. Bei der Detektionsfläche kann es sich zum Beispiel um ein Array oder ein Feld (insbesondere zweidimensionales Feld) von lichtempfindlichen Zellen handeln, zum Beispiel CCD- oder CMOS-lichtempfindlichen Zellen.

Die Größe der vorbestimmten Fläche des Teilbereiches kann vorzugsweise insbesondere so gewählt sein, dass sichergestellt ist, dass im Wesentlichen nur Licht, welches aus oder von einem bestimmten Punkt in der objektseitigen Brennebene des Objektivs in verschiedenen Richtungen ausgesendet wird, durch die Pixel der vorbestimmten Fläche detektiert wird. Somit kann nicht von der Objektebene des Objektivs ausgehendes Licht von der Detektion ausgeschlossen werden. Die Größe der vorbestimmten Fläche kann zum Beispiel einige Quadratmikrometer betragen.

Während der Abstand zwischen dem Objektiv und dem Probenbereich in der Tiefenrichtung entlang der diskreten Relativverfahrpositionen variiert wird, werden gleichzeitig die Intensitätswerte der Pixel des zweidimensionalen Teilbereichs ausgelesen; es wird dann für jede Relativverfahrposition (das heißt für jeden Abstand zwischen Objektiv und Probenbereich) der höchste Intensitätswert der Intensitätswerte der Pixel bestimmt. Es wird also als der höchste Intensitätswert der Wert genau eines Pixels des Teilbereichs für eine jeweilige Relativverfahrposition bestimmt.

Jeder derart bestimmte höchste Intensitätswert wird zu der zugehörigen Relativverfahrposition (das heißt Abstand zwischen Objektiv und Probenbereich) zugeordnet. Somit wird eine Vielzahl von höchsten Intensitätswerten für die Vielzahl der verschiedenen Relativverfahrpositionen bestimmt. Der resultierende Verlauf für verschiedene Relativverfahrpositionen kann dabei mehrere lokale Maxima bzw. ein globales Maximum aufweisen. Die lokalen Maxima und auch das globale Maximum können jeweils eine Reflexion des Laserstrahls an einer der Grenzflächen anzeigen. Die Bezugsrelativverfahrposition kann dabei zum Beispiel einem Abstand zwischen dem Objektiv und dem Probenbereich entsprechen, bei dem der Laserstrahl auf eine bestimmte Grenzfläche innerhalb des Probenbereichs fokussiert wird, insbesondere eine Grenzfläche zwischen einem Substratträger, nachfolgend auch als Biochip bezeichnet (insbesondere Oberfläche des Biochip) und einem Eindeckmedium (bzw. Einbettungsmedium). Die Ermittlung der Bezugsrelativverfahrposition kann dann eine Einstellung einer Relativverfahrposition zum Aufnehmen des Bildes erleichtern. Zum Beispiel kann das Bild bei Einstellung der Bezugsrelativverfahrposition aufgenommen werden; es können dann vorzugsweise weitere Bilder bei Positionen um die Bezugsrelativverfahrposition herum aufgenommen werden, zum Beispiel bei anderen Relativverfahrpositionen, die einen etwas (einige Mikrometer) größeren (und/oder kleineren) Abstand zwischen Objektiv und Probenbereich haben. Weiteres Wissen über die Beschaffenheit und Geometrie einer innerhalb des Probenbereichs befindlichen Probe können eine geeignete Einstellung einer Relativverfahrposition zum Aufnehmen des Bildes ausgehend von der Bezugsrelativverfahrposition erleichtern.

Zum Bestimmen der Bezugsrelativverfahrposition können vorzugsweise eine Vielzahl von Teilbildern während des relativen Verfahrens des Objektivs und des Probenbereichs aufgenommen werden und kontinuierlich hinsichtlich des jeweiligen höchsten Intensitätswertes ausgewertet werden. Dabei können zum Beispiel einige tausend Teilbilder pro Sekunde aufgenommen werden. Die Belichtungszeiten können im Mikrosekundenbereich liegen. Eine Schrittweite in der Tiefenrichtung zwischen zwei Teilbildern kann zwischen 200 nm und 1000 nm, insbesondere bei ungefähr 500 nm, liegen. Die Schrittweite zwischen zwei Teilbildern sollte nicht größer als die Schärfentiefe des Mikroskops sein.

Damit kann eine zuverlässige Fokussierung zum Aufnehmen des Bildes gewährleistet werden und ein Hochdurchsatz kann aufgrund der raschen Fokusbestimmung gewährleistet sein.

Gemäß einer Ausführungsform weist das Verfahren ferner die Schritte auf: Relatives Verfahren des Objektivs und des Probenbereichs zueinander entlang der optischen Achse an jeweilige abschließende Relativverfahrpositionen oberhalb und/oder unterhalb der Bezugsrelativverfahrposition oder der finalen Bezugsrelativverfahrensposition; Erfassen jeweiliger Bilder an den jeweiligen abschließenden Relativverfahrpositionen mittels der ersten oder der weiteren Mikroskopkamera sowie Speichern der jeweiligen Bilder; Bestimmen jeweiliger Fokusmetriken für die jeweiligen Bilder; Selektieren jenes Bildes, welches die beste Fokusmetrik aufweist. Vorzugsweise Verwerfen der anderen Bilder, welche nicht die beste Fokusmetrik aufweisen. Hierdurch wird es ermöglicht, in automatisierter Weise ein Bild zu erhalten, welches hinsichtlich seiner Fokussierung optimal ist, ohne dieses durch einen Nutzer betrachten und einen Einstellung durch diesen vornehmen lassen zu müssen, da dieses Bild direkt abgespeichert wird; das Mikroskop muss dann nicht am Ende des Verfahrens in einen Betriebszustand versetzt werden, in welchem Objektiv und Probenbereich optimal zueinander ausgerichtet sind, sondern das Bild kann zu einem späteren Zeitpunkt aus einem Speicher abgerufen werden. Die hier genannte Fokusmetrik kann vorzugsweise auf einem oder mehrerer der folgenden Operatoren beruhen: Marr-Hildreth-Operator, Laplacian-of-Gaussian und Difference-of-Gaussian.

Gemäß einer Ausführungsform ist ein Durchmesser des Laserstrahls so dimensioniert, dass die volle Apertur des Objektivs ausgeleuchtet wird.

Gemäß einer Ausführungsform beträgt der Teilbereich weniger als 1/10 der Detektorfläche, insbesondere weniger als 1/100 der Detektorfläche. Vorzugsweise beträgt der Teilbereich weniger als 50x50 Pixel, insbesondere weniger als 20 x 20 Pixel.

Gemäß einer Ausführungsform der vorliegenden Erfindung ist das Verfahren derart ausgestaltet, dass der Teilbereich eine Größe von zwischen 350 $\mu$m^2 und 6400 $\mu$m^2, insbesondere zwischen 750 $\mu$m^2 und 1300 $\mu$m^2, hat und insbesondere von 16 x 16 Pixeln gebildet ist, wobei die Detektionsfläche insbesondere eine Größe hat, die zwischen 10 und 100 mal so groß ist wie die Größe des Teilbereichs. Je kleiner der Teilbereich gewählt ist, umso schneller kann das Verfahren durchgeführt werden.

Gemäß einer Ausführungsform ist in einem Detektionsstrahlengang zwischen dem Objektiv und der Detektionsfläche eine Linse, insbesondere eine Tubuslinse, angeordnet, die eine Brennebene des Objektivs auf die Detektionsfläche abbildet. Hinter dem (bzw. lichtstromabwärts des) Objektiv kann ein paralleler Strahlengang vorliegen und die parallelen Strahlen können von der Tubuslinse in eine bildseitige Brennebene abgebildet werden. Somit hat eine Verschiebung des Objektivs relativ zu der Tubuslinse keinen Einfluss auf die Abbildung der parallelen Strahlen in die bildseitige Brennebene der Tubuslinse. An einen bestimmten Punkt innerhalb des Teilbereichs der Detektionsfläche gelangen somit nur Strahlen, die von einem bestimmten, gemeinsamen Punkt in der Brennebene des Objektivs in verschiedenen Richtungen ausgegangen sind, insbesondere dem Brennpunkt. Durch geeignete Wahl der Größe der vorbestimmten Fläche kann somit Streulicht (welches nicht von einem Punkt in der objektseitigen Brennebene des Objektivs in verschiedenen Richtungen ausgegangen ist) von der Detektion zur Fokussierung ausgeschlossen werden.

Gemäß einer Ausführungsform der vorliegenden Erfindung ist das Verfahren derart ausgebildet, dass mindestens eine Grenzfläche, insbesondere zwei Grenzflächen, nicht an Luft angrenzt, wobei der Probenbereich insbesondere eine organische Probe umfasst, die auf einem Biochip aufliegt, in einer flüssigen Substanz eingebettet ist und von einem Deckglas abgedeckt ist, wobei ferner insbesondere die Oberseite des Deckglases eine erste Grenzfläche bildet, wobei die Unterseite des Deckglases eine zweite Grenzfläche bildet, und wobei die Oberfläche des Biochips eine dritte Grenzfläche bildet. Die organische Probe kann zum Beispiel eine histologische Probe umfassen, welche beispielsweise angefärbt ist und/oder mit einem oder mehreren Fluoreszenzmarker(n) oder Fluoreszenzmolekül(en) versetzt wurde. Die Fluoreszenzmarker oder Fluoreszenzmoleküle können an vorbestimmten Stellen oder Rezeptoren oder Antigenen an der organischen Probe gebunden sein. Die flüssige Substanz kann zum Beispiel Glycerin umfassen. Die organische Probe kann zum Beispiel eine nasse organische Probe sein, wobei verhindert sein kann, dass die Probe austrocknet. Ausführungsformen der Erfindung ermöglichen, eine in eine Flüssigkeit (dreidimensional, d.h. Im Wesentlichen von allen Seiten) eingebettete organische Probe abzubilden. Die Grenzflächen können durch eine Änderung des Brechungsindexes oberhalb und unterhalb der Grenzfläche charakterisiert sein. Zum Beispiel kann sich bei der Grenzfläche zwischen einem flüssigen Medium und einem festen Medium der Brechungsindex weniger stark ändern als bei einer Grenzfläche von Luft zu einem festen Medium, zum Beispiel Glas. Der Reflexionsgrad an der Grenzfläche kann umso geringer sein, je geringer die Änderung des Brechungsindex an der Grenzfläche ist. Trotz einer relativ geringen Reflexion an der dritten Grenzfläche kann diese durch das erfindungsgemäße Verfahren detektiert werden.

Gemäß einer Ausführungsform der vorliegenden Erfindung ist das Verfahren derart ausgebildet, dass ein Relativabstand zwischen dem Objektiv und dem Probenbereich ausgehend von einem größten Abstand zunächst verringert wird, während Intensitätswerte der Pixel des Teilbereichs erfasst werden, so dass insbesondere zunächst ein erstes lokales Maximum von der Reflexion des Laserstrahls von der ersten Grenzfläche herrührend, danach ein zweites lokales Maximum von der Reflexion des Laserstrahls von der zweiten Grenzfläche herrührend und schließlich ein drittes lokales Maximum von der Reflexion des Laserstrahls von der dritten Grenzfläche herrührend detektiert werden. Das erste lokale Maximum kann ein globales Maximum des Verlaufs der Maxima in Abhängigkeit der Relativverfahrposition sein. Werden alle drei (lokalen) Maxima in dem Verlauf der Maxima in Abhängigkeit der Relativverfahrposition detektiert, so kann die Zuverlässigkeit der Fokussierung verbessert werden. Innerhalb des Verlaufs der Maxima in Abhängigkeit der Relativverfahrposition kann ein (lokales) Maximum zum Beispiel dann bestimmt werden, wenn ein bestimmter Schwellwert der Intensität des Pixels überschritten ist. Der Schwellwert kann zum Beispiel aus dem zuvor detektieren (lokalen) Maximum abgeleitet werden. Das erste lokale Maximum kann größer als das zweite lokale Maximum sein und das zweite lokale Maximum kann wiederum größer als oder im Wesentlichen von gleicher Höhe sein wie das dritte lokale Maximum sein. Wird diese Abfolge von Maxima detektiert, so kann eine Zuverlässigkeit der Identifikation der Grenzflächen, und somit die Fokusbestimmung, erhöht werden. Die Bezugsrelativverfahrposition wird dann also auf Basis des dritten Maximums bestimmt.

Gemäß einer Ausführungsform der vorliegenden Erfindung ist das Verfahren derart ausgebildet, dass die Bezugsrelativverfahrposition derjenigen Relativverfahrposition entspricht, für die der an der dritten Grenzfläche, insbesondere der Oberfläche des Biochips, reflektierte Laserstrahl fokussiert auf den Teilbereich der Detektionsfläche abgebildet wird, wobei insbesondere die Relativverfahrposition zum Aufnehmen des Bildes aus vorbekanntem Wissen über die Probe ausgehend von der Bezugsrelativverfahrposition eingestellt wird. Zum Beispiel kann die Dicke der Probe (auf dem Biochip) zumindest näherungsweise vorbekannt sein und als ein Vorgabewert vorgegeben werden. Ausgehend von der Bezugsrelativverfahrposition (in welcher die Oberfläche des Biochips in der Brennebene des Objektivs liegt) kann zum Beispiel der Abstand zwischen Objektiv und Probenbereich in Abhängigkeit des Vorgabewertes, z.B. um einige Mikrometer (je nach der vorbekannten Dicke der Probe), verändert bzw. korrigiert werden, um einem Probentyp bzw. Substrattyp gerecht zu werden. Es können dann vorzugsweise noch mehrere Bilder bei Verfahrpositionen aufgenommen werden, welche um die korrigierte Bezugsrelativverfahrposition herum liegen.

Gemäß einer Ausführungsform der vorliegenden Erfindung ist das Verfahren derart ausgebildet, dass zwischen der Quelle des Laserstrahls und dem Objektiv zum Reflektieren des Laserstrahls durch das Objektivs hindurch ein dichroitischer oder nicht dichroitischer Strahlteiler angeordnet ist, der insbesondere einen Reflexionsgrad für den Laserstrahl von zwischen 5% und 20% aufweist. Damit kann der Laserstrahl in einfacher Weise in den Strahlengang des Objektivs eingekoppelt werden. Wenn der Reflexionsgrad für den Laserstrahl relativ gering ist, zum Beispiel im Wesentlichen 10%, kann somit auch nur ein geringer Teil des Lichts, welches zum Aufnehmen des Bildes vorgesehen ist, von der Detektion durch die Mikroskopkamera ausgeschlossen werden. In anderen Ausführungsformen kann der Strahlteiler auch aus dem Strahlengang entfernt werden, wenn das Bild des Probenbereichs aufgenommen wird.

Gemäß einer Ausführungsform der vorliegenden Erfindung ist das Verfahren derart ausgebildet, so dass der Strahlteiler eine Keilform aufweist, wobei sich Ebenen einer Vorderseite und Rückseite des Strahlteilers unter einem Keilwinkel schneiden, der insbesondere z.B. zwischen 0,1° und 1° liegt, wobei der Keilwinkel und die Größe des Teilbereichs insbesondere derart gewählt sind, dass nur ein Reflex des Laserstrahls, der nach Reflexion von entweder der Vorderseite oder der Rückseite des Strahlteilers und nach Reflexion von dem Probenbereich auf den Teilbereich abgebildet wird. Der Strahlteiler mit einer Keilform kann das Auftreten von Interferenzen, welche durch Reflexion an einer Vorderseite und einer Rückseite eines als Planplatte gebildeten Strahlteilers auftreten können, vermindern. Zur Fokussierung kann insbesondere das an der Vorderseite des keilförmigen Strahlteilers reflektierte Laserlicht verwendet werden. Das an der Rückseite des keilförmigen Strahlteilers reflektierte Laserlicht wird in der objektseitigen Brennebene des Objektivs an einem lateral verschiedenen Ort fokussiert. Durch geeignete Wahl der Größe und der Position des zweidimensionalen Teilbereichs der Detektionsfläche der Mikroskopkamera kann einer dieser an dem strahlförmigen Strahlteiler reflektierte Laserstrahl von der Detektion ausgeschlossen werden. Damit kann das Verfahren weiter verbessert werden. Vorzugsweise umfasst der Teilbereich alle Pixel der Detektorfläche.

Gemäß einer Ausführungsform der vorliegenden Erfindung ist das Verfahren derart ausgebildet, dass zwischen 1000 und 10000 mal in der Sekunde die Intensitätswerte der Pixel des Teilbereichs während des relativen Verfahrens des Objektivs und des Probenbereichs ausgelesen werden, um die Bezugsrelativverfahrposition zu bestimmen.

Es sollte verstanden werden, dass Merkmale, welche individuell oder in irgendeiner Kombination im Zusammenhang mit dem Verfahren zum Aufnehmen eines Bildes eines Probenbereichs beschrieben, erläutert oder vorgesehen sind, ebenso gut, individuell oder in irgendeiner Kombination auf ein Mikroskopiesystem zum Aufnehmen eines Bildes eines Probenbereichs angewendet werden können, gemäß Ausführungsformen der vorliegenden Erfindung.

Gemäß einer Ausführungsform der vorliegenden Erfindung ist bereitgestellt ein Mikroskopiesystem zum Aufnehmen eines Bildes eines Probenbereichs, aufweisend: eine Laserquelle, die ausgebildet ist, einen Laserstrahl zu erzeugen; wenigstens ein Objektiv, das ausgebildet ist, den Laserstrahl auf den Probenbereich zu richten, der mindestens eine Grenzfläche enthält, wobei das Objektiv ferner eine Abbildung des Laserstrahls auf einen Fokussierungspunkt bewirkt, in einer Fokussierungsebene liegt, welche parallel zu der Brennebene ist und vorzugsweise mit dieser zusammenfällt, und welcher vorzugsweise auf der optischen Achse des Objektivs oder einer dazu parallelen Achse liegt; ferner ist das Objektiv entlang der optischen Achse relativ zu dem Probenbereich an mehrere, unterschiedliche Relativverfahrpositionen verfahrbar; ferner aufweisend wenigstens eine Mikroskopkamera mit einer Detektionsfläche, wobei die Mikroskopkamera ausgebildet ist, für eine jeweilige Relativverfahrposition mehrere Intensitätswerte des an der Grenzfläche reflektierten und durch das Objektiv tretenden Laserstrahls zu erfassen, wobei die Intensitätswerte von Pixeln eines zweidimensionalen Teilbereichs einer Detektionsfläche einer Mikroskopkamera detektiert werden; wenigstens einen Prozessor, der ausgebildet ist, für eine jeweilige Relativverfahrposition einen jeweils höchsten Intensitätswert der erfassten Intensitätswerte des Teilbereichs zu bestimmen, der ferner ausgebildet ist, einen Verlauf der höchsten Intensitätswerte durch Zuordnen des jeweils höchsten Intensitätswertes zu der jeweiligen Relativverfahrposition zu bestimmen, der ferner ausgebildet ist, eine Bezugsrelativverfahrposition aus mindestens einem lokalen Maximum des Verlaufs (67) der höchsten Intensitätswerte zu bestimmen, der ferner ausgebildet ist, ein Antriebsmittel (15) zum Anfahren der Bezugsrelativverfahrposition einzustellen, und der ferner ausgebildet ist, mittels der Mikroskopkamera oder einer weiteren Mikroskopkamera ein Bild des Probenbereichs zu erfassen.

Ausführungsformen der vorliegenden Erfindung werden nun mit Bezug auf die beiliegenden Zeichnungen erläutert. Die Erfindung ist nicht auf die beschriebenen oder illustrierten Ausführungsformen beschränkt.

Fig. 1 zeigt in einer schematischen Seitenansicht ein Mikroskopiesystem gemäß einer Ausführungsform der vorliegenden Erfindung;

Fig. 2 zeigt in einer schematischen Seitenansicht bzw. seitlichen Schnittansicht einen Probenbereich mit einer Probe, von der unter Benutzung des in Fig. 1 illustrierten Mikroskopiesystems ein Bild aufgenommen werden kann;

Fig. 3 illustriert ein Beispiel eines von einer Mikroskopkamera aufgenommenen Bildes;

Fig. 4a, 4b und 4c illustrieren Beispiele eines Teilbereichs einer Detektionsfläche einer Mikroskopkamera mit bei verschiedenen Relativverfahrpositionen aufgenommenen Teilbildern und Fig. 4d zeigt ein Beispiel einer vorbestimmten Fläche innerhalb des Teilbereichs;

Fig. 5 illustriert einen Verlauf von höchsten Intensitätswerten in Abhängigkeit einer Relativverfahrposition, wie er gemäß einer Ausführungsform des Verfahrens bestimmt wird;

Fig. 6 zeigt ein weiteres Beispiel eines lokalen Maximums in einem Verlauf von Maximalwerten in Abhängigkeit von einer Relativverfahrposition, wie gemäß einer Ausführungsform des Verfahrens bestimmt;

Fig. 7 illustriert eine schematische Seitenschnittansicht eines Mikroskopiesystems gemäß einer Ausführungsform der vorliegenden Erfindung im Bereich eines plattenförmigen Strahlteilers;

Fig. 8 illustriert in einer schematischen Seitenschnittansicht einen Teil eines Mikroskopiesystems gemäß einer Ausführungsform der vorliegenden Erfindung im Bereich eines keilförmigen Strahlteilers; und

Fig. 9 illustriert eine Ausführungsform des erfindungsgemäßen Mikroskopiesystems, bei welcher eine Fokussierung des Laserstrahls in einer Fokussierungsebene erfolgt, welche nicht mit der Brennebene des Objektivs zusammenfällt;

Fig. 10a und 10b illustrieren eine Reflexion des Laserstrahls an einer Grenzfläche in unterschiedlichen optischen Ebenen, und

Fig. 11a bis 11d illustrieren unterschiedliche Positionen des Probenbereiches bei einer Durchführung einer Ausführungsform des erfindungsgemäßen Verfahrens, bei welcher die Fokussierungsebene des Laserstrahls gegenüber der Brennebene des Objektivs versetzt ist.

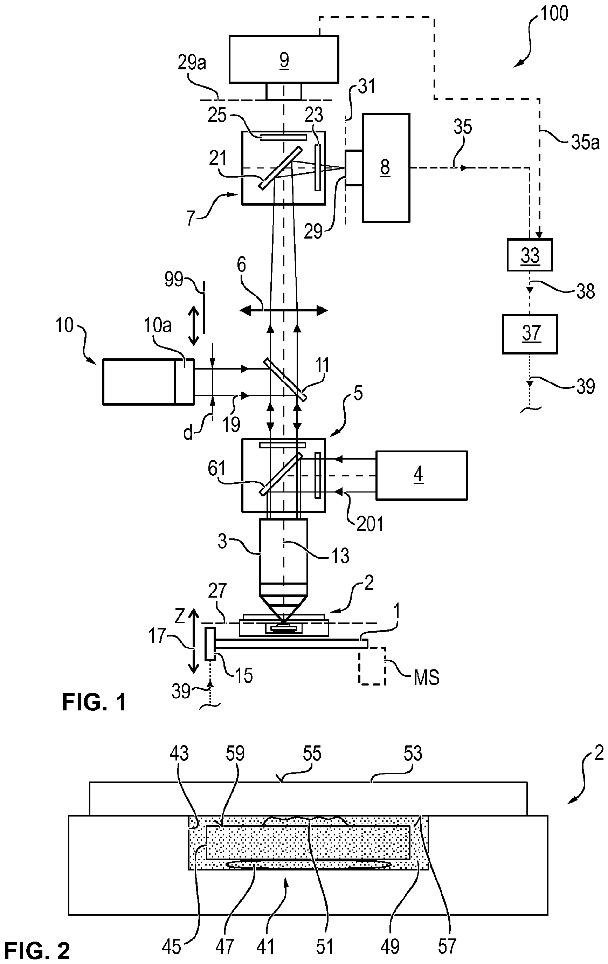

Das in einer schematischen Seitenschnittansicht illustrierte Mikroskopiesystem 100 in Fig. 1 umfasst ein Objektiv 3, das entlang einer optischen Achse 13 des Objektivs relativ zu einem Probenbereich 2 verfahrbar ist. Im Allgemeinen kann das Objektiv 3 und der Probenbereich 2 relativ zueinander entlang der optischen Achse 13 verfahrbar sein. Dazu ist ein Antriebsmittel 15 vorgesehen, welches ausgebildet ist, einen Mikroskoptisch 1 (oder das Objektiv 3) entlang der Pfeilrichtungen 17 (das heißt in Z-Richtung oder in vertikaler Richtung) zu verschieben, während das Objektiv 3 fest ist, oder das Objektiv zu verschieben, während der Tisch fest ist. Das Mikroskopiesystem 100 umfasst ferner einen Laser 10, der ausgebildet ist, einen Laserstrahl 19 zu erzeugen, welcher durch das Objektiv 3 auf den Probenbereich 2 gerichtet wird. Die Laserlichtquelle bzw. der Laser 10 enthält eine Kollimationsoptik 10a, mittels der der Laserstrahl zu einem parallelen, kollimierten Strahlenbündel geformt werden kann. Vorzugsweise ist die Kollimationsoptik 10a einstellbar, um den Laserstrahl als ein konvergentes Strahlenbündel zu formen. Der Probenbereich enthält mindestens eine Grenzfläche, wie mit Bezug auf Fig. 2 unten weiter erläutert wird. Um den Laserstrahl 19 durch das Objektiv 3 zu lenken, ist ferner ein Strahlteiler 11 vorgesehen. Das Objektiv 3 bewirkt eine Abbildung des Laserstrahls auf einen Fokussierungspunkt, welcher auf der optischen Achse des Objektivs oder auf einer dazu parallelen Achse liegt und welcher ferner in einer Fokussierungsebene liegt, welche parallel zu der Brennebene des Objektivs liegt und vorzugsweise mit der Brennebene zusammenfällt. Die Fokussierungsebene verläuft senkrecht zur optischen Achse des Objektivs 3.

In einer Ausführungsform fällt die Fokussierungsebene des Laserstrahls 19 mit der Brennebene des Objektivs zusammen, wobei vorzugsweise insbesondere der Fokussierungspunkt mit dem Brennpunkt des Objektivs zusammenfällt. Der Fokussierungspunkt liegt also vorzugsweise in der Brennebene. Vorzugsweise weist der Laserstrahl 19 hierbei ein kollimiertes, paralleles Strahlenbündel auf, wie in der Figur 1 dargestellt. Vorzugsweise ist hierbei ein Querschnittsdurchmesser d des Laserstrahls 19 im Wesentlichen gleich der Apertur des Objektivs 3 an der Stelle, an welcher der Laserstrahl 19 in das Objektiv 3 eintritt; mit anderen Worten: der Durchmesser d des Laserstrahls 19 ist so dimensioniert ist, dass die volle Apertur des Objektivs 3 an der Stelle, an welcher der Laserstrahl 19 in das Objektiv 3 eintritt, ausgeleuchtet wird.

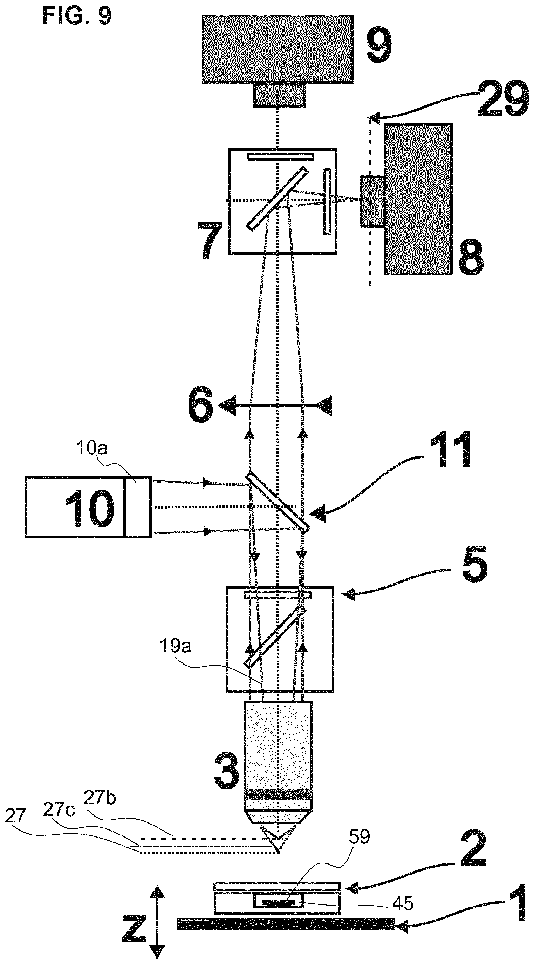

In einer weiteren Ausführungsform weist der Laserstrahl ein zum Objektiv hin konvergentes Strahlenbündel auf, wie später noch unter Bezug auf die Figur 9 beschrieben. Vorzugsweise fällt hierbei die Fokussierungsebene des Laserstrahls nicht mit der Brennebene des Objektivs zusammen, so dass insbesondere der Fokussierungspunkt nicht mit dem Brennpunkt des Objektivs zusammenfällt. Vorzugsweise weist die Fokussierungsebene des Laserstrahls hierbei einen kleineren Abstand zum Objektiv hin auf als die Brennebene des Objektivs. Jedoch auch hierbei verläuft die Fokussierungsebene senkrecht zur optischen Achse des Objektivs 3. Auch hierbei verläuft die Fokussierungsebene parallel zur Brennebene.

Das Mikroskopsystem 100 aus Figur 1 umfasst ferner wenigstens eine Mikroskopkamera 8 mit einer Detektionsfläche 29, die ausgebildet ist, von Pixeln eines zweidimensionalen Teilbereichs der Detektionsfläche detektierte Intensitätswerte des aus dem Probenbereich 2 reflektierten und durch das Objektiv 3 tretenden Laserstrahls 19 zu erfassen. In der hier in Figur 1 illustrierten Ausführungsform 100 des Mikroskopiesystems ist zum Ablenken von rotem Licht, welches durch das Objektiv 3 sowie eine Tubuslinse 6 getreten ist, ein Filtersatz 7 vorgesehen, um Licht mit einen Rotanteil auf die Mikroskopkamera 8 zu reflektieren. Dazu ist der Filtersatz 7 für eine Rot-Grün-Kanaltrennung vorgesehen. Insbesondere umfasst der Filtersatz 7 einen halbdurchlässigen Spiegel 21 sowie einen Rotfilter 23, welcher Wellenlängen außerhalb eines roten Wellenlängenbandes ausfiltert, so dass nur Wellenlängen eines gewünschten Rotbandes auf die Detektionsfläche 29 der Mikroskopkamera 8 auftrifft.

Der Filtersatz 7 umfasst ferner vorzugsweise einen Grünfilter 25, um nur ein gewünschtes Grünband auf eine vorzugsweise vorhandene zweite Mikroskopkamera 9 hindurchzulassen. Die zweite Mikroskopkamera 9 ist optional, in anderen Ausführungsformen braucht nur eine einzige Mikroskopkamera vorgesehen sein. Auch der Filtersatz 7 ist optional und kann in anderen Ausführungsformen fehlen. In diesen Ausführungsformen kann die Mikroskopkamera 8 anstelle der zweiten Mikroskopkamera 9 entlang der optischen Achse 13 angeordnet sein. Für bestimmte Fluoreszenzuntersuchungen kann es jedoch vorteilhaft sein, das Fluoreszenzlicht mehrerer Fluorophore separat durch zwei verschiedene Mikroskopkameras bzw. Detektionskanäle aufzunehmen.

Das Mikroskopiesystem umfasst ferner eine (in Fig. 1 schematisch dargestellte) Linse 6, insbesondere eine Tubuslinse, oder ein Linsensystem 6, die oder das zwischen dem Objektiv 3 und der Mikroskopkamera 8 in einem Strahlengang angeordnet ist und die zusammen mit dem Objektiv 3 eine Brennebene 27 des Objektivs 3 auf die Detektionsfläche 29 der Mikroskopkamera 8 abbildet. Insbesondere bilden Objektiv und Linse 6 zusammen ein optisches System, welches eine Abbildung des Brennpunktes der Brennebene des Objektivs auf einen Bildpunkt einer Bildebene bewirkt, an welcher sich die Detektionsfläche 29 befindet. Die Detektionsfläche 29 der Mikroskopkamera 8 liegt in einer Brennebene 31 der Linse 6.

Das System 100 kann für eine jeweilige Relativverfahrposition mehrere Intensitätswerte des an der Grenzfläche reflektierten und durch das Objektiv tretenden Laserstrahls erfassen, wobei die Intensitätswerte von Pixeln eines zweidimensionalen Teilbereichs der einer Detektionsfläche 29 der Mikroskopkamera 8 detektiert werden.

Das Mikroskopiesystem 100 umfasst ferner einen Prozessor 33, der ausgebildet ist, für eine jeweilige Relativverfahrposition einen jeweils höchsten Intensitätswert der erfassten Intensitätswerte des Teilbereichs 65 zu bestimmen. Ein auf diese Weise bestimmter höchster Intensitätswert wird der entsprechenden Relativverfahrposition zugeordnet, so dass aus solchen jeweiligen höchsten Intensitätswerten für jeweilige Relativverfahrpositionen ein Verlauf an höchsten Intensitätswerten bestimmt wird. Es wird dann eine Bezugsrelativverfahrposition aus mindestens einem insbesondere lokalen Maximum des Verlaufs der höchsten Intensitätswerte bestimmt. Der Prozessor steuert dann unter Verwendung einer Steuereinheit 37 das Antriebsmittel 15 zum Anfahren der Bezugsrelativverfahrposition an. Ferner erfasst der Prozessor 33 mittels der Mikroskopkamera 8 oder einer weiteren Mikroskopkamera 9 ein Bild des Probenbereichs. Hierbei übermittelt der Prozessor 33 ein Anforderungssignal 38 an die Steuerung 37 zum Anfordern des Einstellens einer bestimmten Position in z-Richtung.

Dazu ist der Prozessor 33, welcher beispielsweise in einem Computer umfasst sein kann, kommunikativ mit der Mikroskopkamera 8 verbunden, um Intensitätssignale 35 der Intensitäten der Pixel des Teilbereichs der Detektionsfläche 29 erfassen bzw. auslesen, insbesondere in einem Rot-Kanal. Uber diese Kamera 8 kann der Prozessor 33 auch vorzugsweise Intensitätssignale 35 der Intensitäten der Pixel der Detektionsfläche 29 erfassen bzw. auslesen, um ein Bild des Probenbereiches zu erfassen, insbesondere in einem Rot-Kanal.

Vorzugsweise ist der Prozessor 33 ferner kommunikativ mit der weiteren Mikroskopkamera 9 verbunden, um vorzugsweise Intensitätssignale 35a der Intensitäten der Pixel einer Detektionsfläche 29a auszulesen, um ein Bild des Probenbereiches zu erfassen, insbesondere in einem Grün-Kanal.

Das Mikroskopiesystem 100 umfasst ferner die Steuereinheit bzw. Steuerung 37, welche ebenfalls mit dem Prozessor 33 verbunden ist (oder den Prozessor umfasst) und welche ausgebildet ist, den Antrieb 15 durch Steuersignale 39 zur Verschiebung des Mikroskoptisches 1 (oder des Objektivs 3) anzusteuern. Ferner kann ein Messsystem MS vorgesehen sein, welches die Z-Position (das heißt Relativverfahrposition) unabhängig misst und an die Steuerung 37 kommuniziert.

Zum Aufnehmen eines Bildes des Probenbereichs 2 wird sodann eine Relativverfahrposition zum Aufnehmen des Bildes basierend auf der Bezugsrelativverfahrposition bestimmt und eingestellt und schließlich das Bild mittels der Mikroskopkamera 8 oder der Mikroskopkamera 9 aufgenommen.

Der Probenbereich 2 umfasst einen Objektträger mit eingebettetem Biochip, wie in größerem Detail in einer schematischen Seitenschnittansicht in Fig. 2 illustriert ist. Der Probenbereich 2 umfasst einen Objektträger 41, der eine plattenförmige Struktur mit einer Aussparung 43 hat. In der Aussparung 43 des Objektträgers 41 ist ein Biochip 45 angeordnet und mittels eines Klebers 47 an dem Objektträger 41 angebracht. Um den Biochip 45 herum ist innerhalb der Aussparung 43 Glycerin 49 eingefüllt. Auf dem Biochip 45 ist eine (biologische) Probe 51 aufgebracht. Die Probe 51 ist somit in das Glycerin 49 eingebettet. Ein Deckglas 53 deckt die Aussparung 43 mit der darin befindlichen Probe 51 umgeben mit Glycerin 49 ab. Das Deckglas 53 hat eine obere Oberfläche 55, welche eine erste Grenzfläche bildet, und eine untere Oberfläche 57, welche eine zweite Grenzfläche bildet. Die Oberfläche 59 des Biochips 45 bildet eine dritte Grenzfläche. Insbesondere wird diese dritte Grenzfläche 59 in einem Verfahren zur Fokussierung gemäß einer Ausführungsform der vorliegenden Erfindung bestimmt.

Die Bezugsrelativverfahrposition (relativer vertikaler Abstand zwischen dem Objektiv 3 und dem Probenbereich 2) ist eingenommen, wenn der Laserstrahl 19 von dem Objektiv 3 auf die Oberfläche 59 (das heißt die dritte Grenzfläche) des Biochips 45 fokussiert ist. Sobald diese Bezugsrelativverfahrposition aufgefunden ist, kann ein oder können mehrere Bilder durch Auslesen der vorzugsweise gesamten Detektionsfläche 29 der Mikroskopkamera 8 aufgenommen werden, wenn die Probe 51 zum Beispiel mit sichtbarem Licht beleuchtet wird oder mit geeignetem fluoreszanzregendem Licht beleuchtet wird. Alternativ wird hierbei die Detektionsfläche 29a der Kamera 9 verwendet.

In der in Fig. 1 illustrierten Ausführungsform wird zur Veränderung der Relativverfahrposition (Abstand zwischen Objektiv 3 und Probenbereich 2) der Mikroskoptisch 1 vertikal verfahren, während das Objektiv 3 fest ist. In anderen Ausführungsformen kann der Mikroskoptisch 1 fest sein, während das Objektiv 3 vertikal verfahren werden kann.

Zur Anregung von Fluoreszenz in der Probe 51 (welche zum Beispiel mit Fluorophoren versetzt sein kann) wird eine Lichtquelle 4 (z.B. eine LED) verwendet, welche Anregungslicht 201 eines geeigneten, z.B. blauen, Emissionsspektrums erzeugt. Über einen Fluoreszenzfiltersatz 5 erfolgt die spektrale Trennung von Anregungslicht und Fluoreszenzlicht. Mithilfe des Objektivs 3 und der Tubuslinse 6 wird das in der Objektebene 27 emittierte Fluoreszenzlicht vergrößert auf die beiden Mikroskopkameras 8, 9 abgebildet. Die Lichtstrahlen des Fluoreszenzlichts verlaufen zwischen dem Objektiv 3 und der Tubuslinse 6 parallel; der Raum zwischen Objektiv 3 und Tubuslinse 6 wird daher auch als "Unendlich-Raum" bezeichnet. Der Fluoreszenzfiltersatz 5 kann dazu einen dichroitischen Spiegel 61 umfassen, welcher das Fluoreszenzanregungslicht 201 reflektiert, während das Fluoreszenzlicht im Wesentlichen unreflektiert hindurchtreten kann.

Zur schnellen Fokussierung vor einer Bildaufnahme wird die Probe vor der mikroskopischen Aufnahme mithilfe des Laser- und Kamera-basierten Systems optisch vermessen. Dabei wird zur Bestimmung der Schärfenposition der Oberfläche des Biochips das Licht des Lasers 10 mit zum Beispiel sichtbarem rotem Emissionsspektrum verwendet und mithilfe der Strahlteilerplatte 11 auf die optische Achse 13 des Objektivs 3 eingekoppelt. Dabei kann die Einkopplung im Unendlich-Raum (das heißt in dem Abschnitt, in dem die Strahlen parallel zueinander verlaufen) des Mikroskops erfolgen. Der Laserstrahl 19 ist dabei durch eine nicht illustrierte Optik zu einem parallelen Strahlenbündel 19 geformt. In dieser Ausführungsform weist der Laserstrahl ein kollimiertes, paralleles Strahlenbündel auf. In einer Ausführungsform fällt die Fokussierungsebene des Laserstrahls mit der Brennweitenebene des Objektivs zusammen. Vorzugsweise ist ein Querschnittsdurchmesser des Laserstrahls im Wesentlichen gleich der Apertur des Objektivs.

Der Laserstrahl 19 durchläuft den Fluoreszenzfiltersatz 5 und wird von dem Objektiv 3 in die Objektebene 27 des Mikroskopiesystems 100 fokussiert. Befindet sich eine optische Grenzfläche in der Fokusebene 27 des Objektivs 3, so entsteht eine punktförmige Reflexion des Laserstrahls 19, die durch das Objektiv 3 und die Tubuslinse 6 auf die Mikroskopkamera 8, insbesondere auf die Detektionsfläche 29 der Mikroskopkamera 8, abgebildet wird. Die Reflexion des Laserstrahls 19 erscheint dabei als ein punktförmiges Signal im Bild der Kamera, dessen Intensität vom Grenzflächenübergang an den Materialien des Objektträgers abhängig ist.

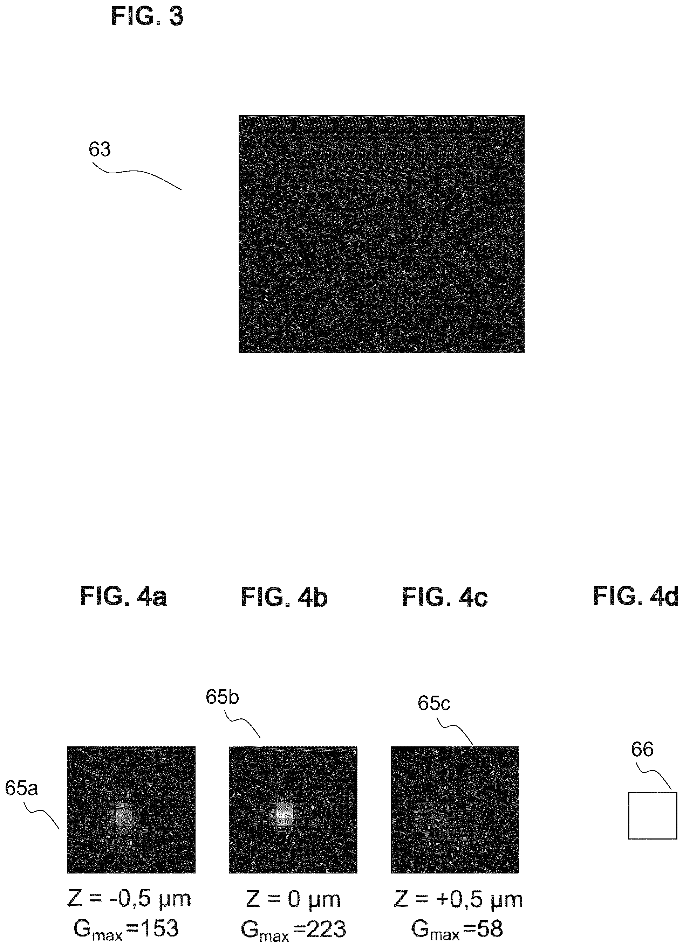

Fig. 3 zeigt ein Gesamtbild einer punktförmigen Laserreflexion, wie es von der gesamten Detektionsfläche 29 der Mikroskopkamera 8 aufgenommen wurde. Das gesamte Bild 63, wie es von der Mikroskopkamera 8 registriert wurde, umfasst zum Beispiel 1024 x 1024 Pixel.

In dem Verfahren zur Bestimmung der Bezugsrelativverfahrposition (das heißt der Position, in der die Oberfläche 59 des Biochips 45 in der Brennebene 27 des Objektivs 3 angeordnet ist) wird nur ein Teilbereich der Pixel der gesamten Detektionsfläche 29 der Mikroskopkamera 8 ausgelesen, während der Abstand zwischen dem Objektiv 3 und dem Probenbereich 2 bzw. die Relativverfahrposition verändert wird.

Fig. 4a, 4b und 4c illustrieren dazu beispielhaft Teilbereiche 65a, 65b, 65c der Detektionsfläche 29 und die von den darin enthaltenen Pixeln detektierten Intensitäten als Grauwerte des Bildes des Laserreflexes für verschiedene Relativverfahrpositionen. Die Teilbereiche 65a, 65b, 65c können zum Beispiel von 16 x 16 Pixeln gebildet sein. Die Fig. 4a, 4b und 4c illustrieren dabei Teilbilder, welche bei z = -0,5 µm, z = 0 µm und z = +0,5 µm relativ zu dem Relativabstand zwischen Objektiv 3 und Probenbereich 2 entstehen, wobei die Oberfläche 59 des Biochips 45 in der Brennebene 27 des Objektivs angeordnet ist, so dass die zu bestimmende Bezugsrelativverfahrposition für z = 0 µm angenommen wird. Der jeweilige höchste Intensitätswert Gmax ist ebenfalls illustriert. Wird die Fokusebene des Objektivs von der entsprechenden Grenzfläche im Objektträger wegbewegt (siehe Fig. 4a, 4c), so wird das Lasersignal abgeschwächt bzw. verbreitert abgebildet. Aus Fig. 4a, 4b und 4c wird deutlich, dass bereits bei Verschiebungen um ca. +/- 500 nm die Aussteuerung der einzelnen Pixel deutlich abnimmt, das heißt, die höchste Pixelintensität über den Teilbereich ist am größten, wenn genau die Bezugsrelativverfahrposition eingenommen ist, das heißt in dem Fall der Fig. 4b. Durch die Verwendung des hier beschriebenen Systems mit einer Fokussierung des Laserstrahls auf einen Brennpunkt in der Brennebene des Objektivs kann eine besonders genaue Ortsauflösung der z-Position erreicht werden. Würde ein flächig ausgedehntes und gesamtes Muster auf mehrere Pixel des Teilbereiches projiziert werden, so würde dieses Muster auch in der idealen Fokussierungsposition eine größere räumliche Ausdehnung als der hier verwendete Laserstrahl aufweisen, so dass auch eine Ortsauflösung in z-Richtung gröber bzw. ungenauer wäre. Ferner würde es bei einer solchen Musterprojektion nicht ausreichen, nur eine einzelne höchste Pixelintensität des Teilbereiches als Maß für eine Fokussierung zu betrachten, wie beim erfindungsgemäßen Verfahren möglich, sondern es müssten mehrere Pixel zusammengefasst und durch eine gemeinsame Analyse der mehreren Pixel müsste eine Fokussierung bezogen auf das flächige Muster als ein Maß für eine Fokussierung bestimmt werden, welches eindeutig zeitaufwendiger wäre als die erfindungsgemäße Betrachtung der höchsten Intensität eines einzelnen Pixels des Teilbereiches.

Um die Fokusposition der Biochipoberfläche (das heißt den Relativabstand zwischen Objektiv 3 und Probenbereich 2, in dem die Oberfläche 59 des Biochips 45 in der Brennebene 27 des Objektivs 3 ist) zu bestimmen, wird der Objektträger 1 in Z-Richtung 17 durch die Fokusebene 27 des Mikroskopiesystems 100 bewegt, vorzugsweise mit einer ersten Abstandsauflösung bzw. Ortsauflösung. Dies kann mithilfe einer in Z-Richtung motorisierten Objektivaufnahme oder durch Bewegung des Objektträgers 1 erreicht werden. Für die Fokusbestimmung wird der Intensitätsverlauf der Laserreflexion mit einer zu der Abstandsauflösung bzw. Ortsauflösung korrespondierenden Bilderfassungsrate von der Mikroskopkamera 8 aufgezeichnet. Um möglichst hohe Bildraten erreichen zu können, wird nur ein geringer Teilbereich (zum Beispiel Teilbereich 65 illustriert in Fig. 4a, 4b, 4c) ausgelesen und an den Prozessor 33 übermittelt. Zum Beispiel kann der Teilbereich 16 x 16 Pixel umfassen, wodurch Bilderfassungsraten von mehreren tausend Bildern, z.B. etwa 3000 Bildern, pro Sekunde erreichbar sind.

Fig. 4d illustriert beispielhaft eine vorzugsweise verwendete vorbestimmte Fläche 66, in welcher Intensitätswerte eines oder mehrerer Pixel erfasst und ausgewertet werden, um das Maximum über den Teilbereich (z.B. 65a, 65b, 65c) zu ermitteln. Die vorbestimmte Fläche 66 kann genau der Fläche eines einzelnen Pixels entsprechen, oder es können mehrere Pixel herangezogen werden, um die vorbestimmte Fläche 66 abzudecken.

Für jedes für einen bestimmten Relativabstand (Relativverfahrposition) aufgezeichnetes Teilbild kann der höchste Pixel-Grauwert bzw. der höchste Intensitätswert ermittelt werden. Mittels Kenntnis des Anforderungssignals 28 an die Steuerung 37 kann der Prozessor 33 die Verknüpfung der Kameradaten bzw. Intensitätswerte mit den zugehörigen Relativverfahrpositionen vornehmen sowie ferner die Bezugsrelativverfahrposition bestimmen.

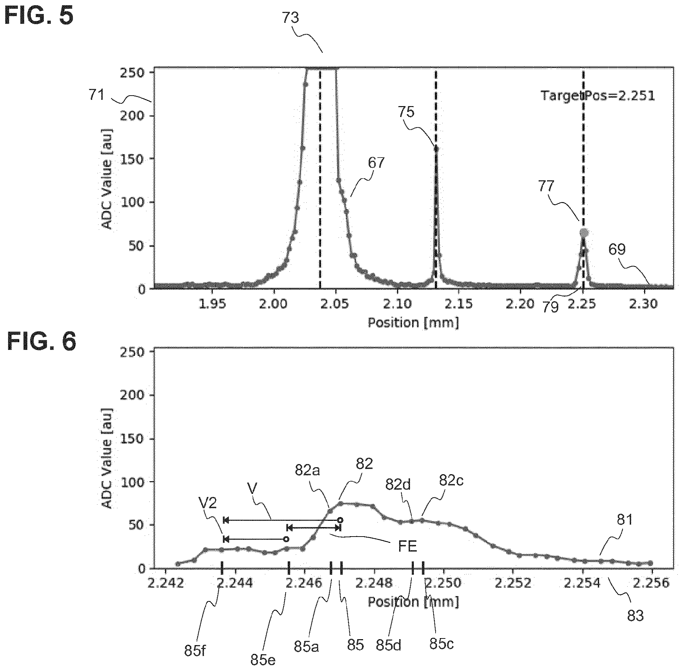

Fig. 5 illustriert ein Beispiel eines Verlaufs 67 der (für jede Relativverfahrposition) bestimmten höchsten Intensitätswerte in Abhängigkeit der Relativverfahrposition als eine Kurve 67 in einem Koordinatensystem, wobei auf einer Abszisse 69 die Relativverfahrposition (Z-Position) und wobei auf der Ordinate 71 der jeweils höchste Intensitätswert in dem Teilbereich bei der zugehörigen Relativverfahrposition aufgetragen ist. Der niedrigste Z-Wert indiziert hierbei eine Position, bei welcher sich der Probenbereich am weitesten von dem Objektiv entfernt befindet, der höchste Z-Wert indiziert hierbei eine Position, bei welcher sich der Probenbereich am nahesten zum Objektiv befindet. Es erfolgt zunächst ein relatives Verfahren des Objektivs und des Probenbereichs zueinander mittels Verringern eines Relativabstandes zwischen dem Objektiv und dem Probenbereich ausgehend von einem größten Abstand hin zu einem kleinsten Abstand mit einer ersten Abstandsauflösung, wobei der Verlauf der höchsten Intensitätswerte bestimmt wird, welcher mehrere Maxima aufweist. Der Verlauf weist insbesondere ein erstes lokales Maximum 73, danach ein zweites lokales Maximum 75 und schließlich ein drittes lokales Maximum 77 des Verlaufs auf.

Die Kurve 67 zeigt ein charakteristisches Signalmuster ("Autofokussignal"), welchem die Geometrie des Probenbereichs, wie er in Fig. 2 illustriert ist, zugrunde liegt. Da der Aufbau des Probenbereichs 2 bekannt ist, kann aus dem Signalverlauf 67 die Z-Position des Biochips 45, insbesondere die Oberfläche 59 des Biochips 45, bestimmt werden.

Die Kurve 67 (Autofokussignal) weist ein erstes Maximum 73 auf, welches von der Reflexion des Laserstrahls 19 an der ersten Grenzfläche 55 (obere Oberfläche des Deckglases 53) herrührt. Ferner weist die Kurve 67 ein zweites Maximum 75 auf, welches von der Reflexion des Laserstrahls 19 von der unteren Oberfläche 57 (zweite Grenzfläche) des Deckglases 53 herrührt. Schließlich weist die Kurve 67 ein drittes Maximum 77 auf, welches von der Reflexion des Laserstrahls 19 von der Oberfläche 59 des Biochips 45 (dritte Grenzfläche) herrührt. Die Fokusposition der Biochip-Oberfläche 59 bzw. die Bezugsrelativverfahrposition ergibt sich dabei aus der Bestimmung der Z-Position 79 des dritten Signalmaximums 77.

Mit Hilfe des Mikrocontrollers bzw. der Steuerung 37 und eines Antriebsmittels zum Verfahren des Objektivs 3 kann das Objektiv 3 anschließend unter Vergrößerung des Abstandes zwischen Objektiv und Probenbereich wieder in Richtung des ermittelten Fokusortes bzw. die Bezugsrelativverfahrposition zurückgefahren werden. Dies erfolgt insbesondere unter Verwendung einer zweiten Abstandsauflösung, welche höher bzw. feiner ist als die erste Abstandsauflösung. Dabei wird die Länge der Fahrt über das Autofokussignal gesteuert, das simultan zur Bewegung in Z überwacht und ausgewertet wird. Hierbei erfolgt eine Bestimmung jeweils weiterer höchster Intensitätswerte an jeweiligen, weiteren Relativverfahrenspositionen sowie eine Detektion eines Vorliegens des Maximum 82 aus der Figur 6 auf Basis der weiteren Intensitätswerte. Vorzugsweise erfolgt dann in dem Fall, dass der Laserstrahl ein zum Objektiv hin kollimiertes, paralleles Strahlenbündel aufweist und ferner die Fokussierungsebene des Laserstrahls mit der Brennebene des Objektivs zusammenfällt, ein Einstellen der Relativverfahrposition an eine solche finale Bezugsrelativverfahrensposition, an welcher das auf Basis der weiteren höchsten Intensitätswerte detektierte lokale Maximum vorliegt bzw. vorlag.

Fig. 6 illustriert hierzu ein Autofokussierungssignal, welches von der Reflexion des Laserstrahls 19 von der Oberfläche 59 des Biochips 45 herrührt, das heißt ein drittes Maximum 82 in einem Verlauf an einer Position 85. Der Verlauf 81 der weiteren höchsten Intensitätswerte in dem Teilbereich in Abhängigkeit der Z-Position auf der Abszisse 83 wurde bestimmt unter Verwendung eines Objektivs mit 20-facher Vergrößerung mit einer numerischen Apertur von 0,5, wobei ein Laser mit einer Emissionswellenlänge von $\lambda_0$ = 635 nm eingesetzt wurde. Die axiale Auflösung dieses Signals 81 kann zum Beispiel aus der Halbwertsbreite $\Delta$ zu ca. 2,1 $\mu$m bestimmt werden. Die Bezugsrelativverfahrposition 85 kann zum Beispiel als die Z-Position bestimmt werden, bei der das Maximum 82 auftritt oder als ein Schwerpunkt der Kurve 81 bzw. Schwerpunkt des Maximums 82. Es kann dann das Objektiv relativ zu dem Probenbereich zu der Relativverfahrposition 85 verfahren werden, an der das Maximum 82 der weiteren höchsten Intensitätswerte vorlag. Dies bedingt dann ggf. eine weitere Richtungsumkehr des Antriebes 15 aus der Fig. 1, da ein Erkennen des Wertes 82 an der Position 85 als das Maximum 82 beispielsweise erst dann erfolgen kann, wenn ein darauffolgendes Vorliegen des Wertes 82a an der Position 85a erkannt wird, so dass von der Position 85a zurück zur Position 85 verfahren werden muss.

Die Fokusposition als die finale Bezugsrelativverfahrensposition gilt vorzugsweise als erreicht und die Fahrtbewegung wird vorzugsweise gestoppt, wenn die folgenden Bedingungen erfüllt sind:

- Ein zuvor definierter Schwellwert des Autofokussignals wurde überschritten. Dieser Schwellwert wird aus der Signalhöhe des zuvor ermittelten Autofokussignals ermittelt.
- Das Autofokussignal erreicht ein lokales Maximum 82.

Die Oberfläche des Biochips muss jedoch nicht die optimale Bildgebungsebene für die Fluoreszenzmikroskopie repräsentieren, da die Schichtdicke der Probe 51 zum Teil größer sein kann als die Schärfentiefe des Mikroskopiesystems 100. Daher können um die ermittelte Fokusposition bzw. die ermittelte finale Bezugsrelativverfahrposition herum mehrere Fluoreszenzaufnahmen erstellt werden. Daher kann dann vorzugsweise ausgehend von der finalen Bezugsrelativverfahrensposition eine Erfassung mehrerer Bilder des Probenbereiches mittels der Kamera 8 oder der weiteren Kamera 9 aus der Figur 1 erfolgen. Die Kamera 8 erfasst vorzugsweise Bilder in einem Rot-Kanal. Die Kamera 9 erfasst vorzugsweise Bilder in einem Grün-Kanal. Hierbei erfolgt ein relatives Verfahren des Objektivs und des Probenbereichs zueinander entlang der optischen Achse an jeweilige abschließende Relativverfahrpositionen oberhalb und/oder unterhalb der finalen Bezugsrelativverfahrposition. Es erfolgt hierbei ferner ein Erfassen jeweiliger Bilder an den jeweiligen abschließenden Relativverfahrpositionen mittels der ersten Mikroskopkamera 8 oder der weiteren Mikroskopkamera 9. Der Prozessor 33 speichert dann die jeweiligen Bilder und bestimmt jeweilige Fokusmetriken für die jeweiligen Bilder. Der Prozessor 33 selektiert dann jenes Bild, welches die beste Fokusmetrik aufweist. Vorzugsweise verwirft der Prozessor 33 die anderen Bilder, welche nicht die beste Fokusmetrik aufweisen.

Wie aus Fig. 5 hervorgeht, weisen die Maxima Signalhöhen eines bestimmten Musters auf Aus dem Verlauf kann vorzugsweise das dritte Maximum 77 zum Beispiel als zuverlässig detektiert erkannt werden, falls die Signalhöhe des lokalen Maximums 77 größer als ein zuvor bestimmter oder vorgegebener Schwellwert ist und wenn ferner tatsächlich ein lokales Maximum vorliegt, das heißt, Intensitätswerte rechts und links der Bezugsrelativverfahrposition 79 sind geringer als die Intensität genau bei der Bezugsrelativverfahrposition 79. Somit kann vorzugsweise auf zuverlässige Weise die Bezugsrelativverfahrposition ermittelt werden, in der der Laserstrahl 19 auf die Oberfläche 59 des Biochips 45 fokussiert wird. Um die Maxima 73, 75 und 77 zuverlässig voneinander trennen zu können, ist gemäß einer Ausführungsform der vorliegenden Erfindung die Auflösung des Autofokus-Systems etwa gleich der Schärfentiefe des Mikroskopiesystems. Der Durchmesser d des parallelen Laserstrahls 19 (siehe Fig. 1) ist vorzugsweise so dimensioniert, dass die volle Apertur des Mikroskopobjektivs 3 ausgeleuchtet wird. Zum Beispiel kann ein Laser verwendet werden, welcher eine rote Emissionswellenlänge (zum Beispiel $\lambda_0$ = 635 nm) hat, dafür ergibt sich bei einer numerischen Apertur von 0,5 eine Tiefenschärfe von ca. $t_w$ = 2,54 $\mu$m.

Um zu verhindern, dass Licht, welches von außerhalb der Fokusebene 27 zurückgeworfen wird, die Messungen überlagert und so die axiale Auflösung des Verfahrens verringert, werden die physikalischen Eigenschaften von Laser und Detektor vorteilhaft genutzt, ohne eine üblicherweise verwendete Lochblende zu erfordern. Die aktive Emissionsfläche des Lasers 10 kann vorteilhafterweise wenige $\mu$m betragen, so dass eine Punktlichtquelle vorliegt. Dadurch kann auf eine Lichtquelle-Lochblende verzichtet werden.

Auch kann auf eine Detektor-Lochblende verzichtet werden, da, gemäß einer Ausführungsform der Erfindung, an jedem Z-Messpunkt (an jeder Relativverfahrposition) die Signalstärke jeweils alleinig durch das Pixel mit dem höchsten Intensitätswert in dem Teilbereich der Detektionsfläche 29 definiert wird. Auf diese Weise kann eine virtuelle Lochblende von wenigen Quadratmikrometern simuliert werden, deren Fläche der Pixelfläche entspricht. Je nach Größe der Pixel kann die vorbestimmte Fläche durch ein oder mehrere Pixel gegeben sein. Durch die dabei ausgewertete größere Kamerabildregion von 16 x 16 Pixeln kann das Verfahren gleichzeitig robust gegenüber Abweichungen der Laserposition vom Bildregionszentrum sein. Bei kurzen Belichtungszeiten kann der Einfluss von unscharf abgebildeten Reflexionen von außerhalb der Fokusebene so stark vermindert werden, dass das gewonnene Signal fast ausschließlich durch Laserreflexion aus der Fokusebene 27 definiert wird. Als Pixelgröße kann zum Beispiel 3,45 $\mu$m x 3,45 $\mu$m verwendet werden und die Belichtungszeiten können zum Beispiel zwischen 20 $\mu$s und 1000 $\mu$s liegen.

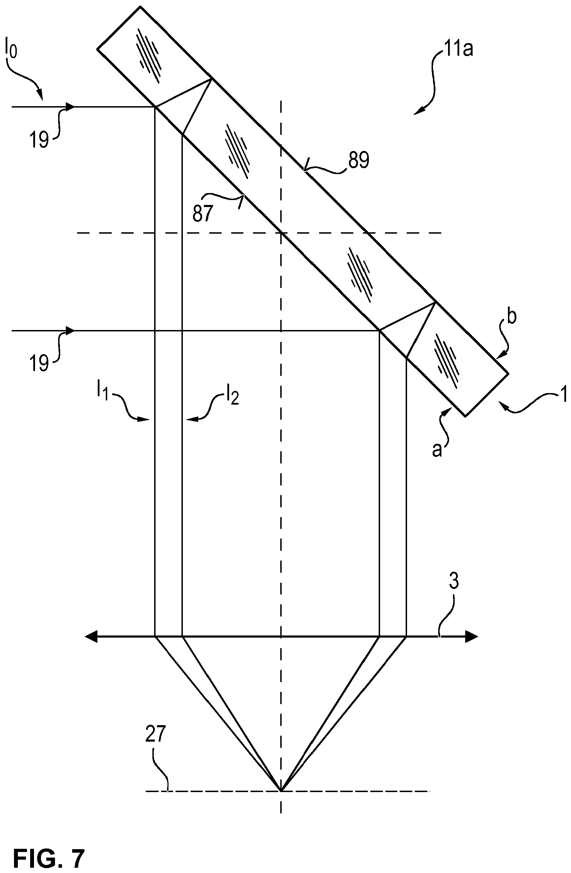

Fig. 7 illustriert in einer schematischen Seitenschnittansicht einen Strahlteiler 11a gemäß einer Ausführungsform der vorliegenden Erfindung, welcher zum Beispiel in dem in Fig. 1 illustrierten Mikroskopiesystem 100 zum Einsatz kommen kann. Bei dem Strahlteiler 11a handelt es sich um einen Parallelplattenstrahlteiler mit einer vorderen Oberfläche 87 und einer hinteren Oberfläche 89, an denen jeweils der Laserstrahl 19 reflektiert werden kann, um zu zwei verschiedenen reflektierten Teilstrahlen $I_1$ und $I_2$ zu führen. Die zwei Teilstrahlen $I_1$ und $I_2$ werden durch das Objektiv 3 in der Brennebene 27 überlagert, wodurch sich Leistungsschwankungen ergeben können. Zur Verminderung dieser Leistungsschwankungen kann eine niedrig kohärente Lichtquelle verwendet werden, wodurch die Interferenzen vermindert werden können.

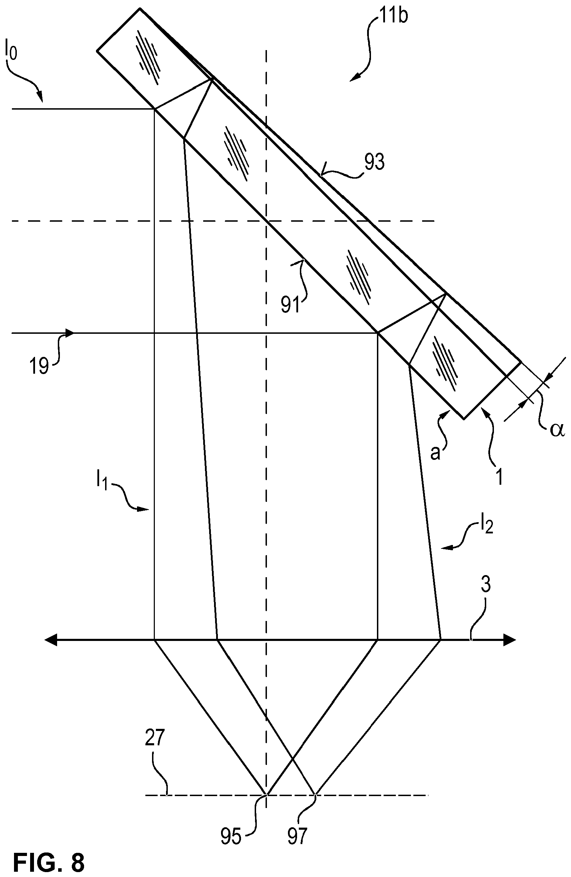

Alternativ kann zur Verminderung dieser Leistungsschwankungen eine Strahlteilerplatte 11b mit einem leichten Keilwinkel ("Keilplatte") eingesetzt werden, wie sie schematisch in einer Schnittansicht in Fig. 8 illustriert ist. Die Keilplatte 11b hat eine vordere Oberfläche 91 und eine hintere Oberfläche 93, die nicht parallel zueinander sind, sondern um einen Winkel $\alpha$ ferner gegeneinander verkippt sind. Durch den Einsatz dieser Keilplatte als Strahlteiler 11 (zum Beispiel in dem in Fig. 1 illustrierten Mikroskopiesystem 100) werden die Laserreflexionen des Laserlichts 19 an der vorderen Seite 91 und der hinteren Seite 93 in unterschiedlichen Richtungen abgelenkt, um zu Teilstrahlen $I_1$ und $I_2$ zu resultieren, welche demzufolge unter verschiedenen Winkeln in das Objektiv 3 eintreten und folglich auf zwei verschiedene Orte 95 bzw. 97 in der Brennebene 27 des Objektivs fokussiert werden. Die Orte 95 und 97 sind somit lateral versetzt in der Objektebene 27. Eine Überlagerung der beiden Teilstrahlen $I_1$, $I_2$ am Beobachtungsort findet nun nicht mehr statt und somit erfolgt auch keine störende Interferenz.

In der Eintrittspupille des Objektivs können sich die beiden Teilstrahlen $I_1$ und $I_2$ weiterhin überlagern. Allerdings bildet sich am Überlagerungsort eine Interferenzmodulation aus, dessen räumliche Frequenz vom Keilwinkel des Strahlteilers abhängig ist. Um Leistungsverluste durch eine ungünstige Lage der Minima und Maxima des Modulationsmusters in der Eintrittspupille zu vermeiden, sollte der Keilwinkel mindestens so groß gewählt werden, dass das Interferenzmuster über die volle Apertur des Objektivs mindestens 10 Maxima bzw. Minima ausweist.

Der Strahlteiler 11b mit einem Keilwinkel kann auch einen Einfluss auf die Bildgebung des Mikroskopiesystems 100 haben. So können sich zum Beispiel laterale, wellenlängenabhängige Verschiebungen des Mikroskopbildes sowie Verzerrungen in eindimensionaler Richtung ergeben. Daher ist der maximale Keilwinkel des Strahlteilers von der jeweiligen Mikroskopieanwendung abhängig. Zum Beispiel kann als Keilwinkel $\alpha = 0,5°$ beispielhaft gewählt werden.

Prinzipiell können etwaig auftretende Abbildungsfehler durch geeignete zusätzliche optische Elemente oder Verfahren in der Bildauswertung korrigiert werden. Zum Beispiel kann eine zweite keilförmige Strahlteilerplatte vorgesehen sein, die identisch zur ersten Strahlteilerplatte ist und im Unendlich-Raum des Mikroskops so angeordnet ist, dass sich die Winkeländerungen durch die Keilform der beiden Strahlteiler gegenseitig aufheben.

Die Verfahren und Systeme gemäß der vorliegenden Erfindung können verschiedene Vorteile ergeben:

Durch die doppelte Nutzung der Mikroskopkamera im Rotkanal zur Fokussierung und zur Erfassung eines oder mehrerer Bilder des Probenbereiches im Rotkanal ist dann kein zusätzlicher Detektor notwendig. Dadurch ergibt sich eine Einsparung von Komponentenkosten und Justageaufwand. Die Anzahl der zusätzlich benötigten Komponenten kann sich so auf ein strahlaufgeweitetes, kollimiertes Lasermodul und einen Strahlteiler beschränken.

Durch die Auswertung eines einzelnen Pixels in den Kameradaten kann sich eine hohe Auflösung in Z-Richtung ergeben, vergleichbar mit einer Fotodetektor-Lochblenden-Kombination (Konfokaltechnik). Gleichzeitig kann der bei Lochblendenanwendungen übliche hohe Justageaufwand entfallen, da für jede Messtiefe eine Detektorregion mit einer Vielzahl von Pixeln (typischerweise 16 x 16) erfasst wird. Dabei ist es unerheblich, welches Pixel innerhalb der Region, das heißt des Teilbereichs, den maximalen Grauwert detektiert oder ausweist.

Da auch die Auswahl der Detektorregion dynamisch erfolgen kann (zum Beispiel während der Initialisierungsphase des Mikroskops), kann sich das Lasersignal nahezu beliebig auf der Detektorfläche der Kamera befinden. Daher ist das Verfahren im Vergleich zu lochblendenbasierten Autofokusanwendungen sehr robust.

Als Lichtquelle kann ein Lasermodul verwendet werden, dessen Emissionswellenlänge im Nah-Infrarot (NIR) liegt, zum Beispiel bei etwa 830 nm. In diesem Fall kann ein dichroitischer Strahlteiler 11 zur Einkopplung des Laserlichts in den Strahlengang des Objektivs verwendet werden. Eine keilförmige Strahlteilerplatte wäre in diesem Fall nicht benötigt.

Zur Vermeidung von interferenzbedingten Signalschwankungen kann prinzipiell auch eine kurzkohärente Lichtquelle, zum Beispiel eine Superlumineszenzdiode bzw. eine LaserLichtquelle mit reduzierter Kohärenzlänge, genutzt werden. In diesem Fall könnte die keilförmige Strahlteilerplatte durch einen einfachen Strahlteiler (Parallelplatte) ersetzt werden. Die Emissionswellenlänge kann dabei im Sichtbaren oder auch im Nah-Infraroten liegen.

Die mikrocontrollergesteuerte Bewegung in Z-Richtung (Veränderung der Relativverfahrposition) kann entweder mit einer motorisierten Objektivaufnahme oder mit einem motorisierten Mikroskoptisch umgesetzt werden.

Gemäß Ausführungsformen der vorliegenden Erfindung wird keine starre Lochblende verwendet (vor der Detektionsfläche), sondern die Helligkeit der einzelnen Pixel einer Detektorregion der Kamera ausgewertet. Die Abmessungen der für die Auswertung herangezogenen vorbestimmten Fläche 66 (siehe Fig. 4D) können in der Größenordnung der herkömmlich verwendeten physikalischen Lochblendenapertur liegen.

Gemäß der zuvor unter Bezug auf die Figuren 1, 5 und 6 beschriebenen nicht erfindungsgemäßen Ausführungsform des Verfahrens weist der Laserstrahl ein zum Objektiv hin kollimiertes, paralleles Strahlenbündel aufweist und ferner fällt die Fokussierungsebene des Laserstrahls mit der Brennebene des Objektivs zusammen. Gemäß dieser Ausführungsform erfolgt nach der Bestimmung einer ersten Bezugsrelativverfahrensposition 79 anhand des Maximums 77 aus der Figur 5 dann anschließend ein Vergrößern des Relativabstandes hin zu der ersten Bezugsrelativverfahrensposition mit einer zweiten Abstandsauflösung, welche höher ist als die erste Abstandsauflösung. Hierbei erfolgt gleichzeitig ein Erfassen von weiteren höchsten Intensitätswerten an den jeweiligen, weiteren Relativverfahrenspositionen, so dass bei Detektieren eines Vorliegens eines lokalen Maximums auf Basis der weiteren höchsten Intensitätswerte jene Relativverfahrposition als eine finale Bezugsrelativverfahrensposition eingestellt wird, an welcher das auf Basis der weiteren höchsten Intensitätswerte detektierte lokale Maximum vorliegt bzw. vorlag. Wie zuvor beschrieben, kann dies eine weitere Richtungsumkehr bedingen. Erfolgt eine solche Richtungsumkehr, so kann ein sogenanntes Umkehrspiel der Mechanik der Antriebsmittels 15 aus der Figur 1 eine Fehlausrichtung zwischen Objektiv und Probenbereich bedingen, so dass eine Fokussierung hierdurch in ihrer Qualität gemindert werden kann.

Es wird nun anhand der Figur 9 eine erfindungsgemäße Ausführungsform des Verfahrens beschrieben, bei welcher eine solche Richtungsumkehr vermieden werden kann, um eine Fehlausrichtung zwischen Objektiv und Probenbereich aufgrund des Umkehrspiels zu vermeiden. Die Laserlichtquelle 10 wird mittels der Kollimationsoptik 10a so eingestellt, dass der Laserstrahl ein zum Objektiv hin konvergentes Strahlenbündel 19a aufweist. Dies bewirkt, dass durch das Objektiv 3 die Fokussierungsebene 27b des Laserstrahls 19a nicht mit der Brennebene 27 des Objektivs zusammenfällt. Hierdurch wird insbesondere bewirkt, dass der Fokussierungspunkt nicht in der Brennebene 27 liegt. Dabei wird der Fokuspunkt über die Kollimationsoptik des Lasers von dem Brennunkt des Mikroskops insbesondere hin zu dem Objektiv verschoben, vorzugsweise um einen Betrag von 3 bis 10 mal der Schärfentiefe des Objektivs. In diesem Fall kann der Konvergenzwinkel (halber Öffnungswinkel) des fokussierten Laserstrahls vorzugsweise im Bereich zwischen -1 arcmin bis - 15 arcmin liegen, ist aber nicht auf diese Werte begrenzt.

Da das Objektiv 3 und die Linse 6 sowie die Kamera 8, und insbesondere der Spiegel 7, in ihren jeweiligen optischen Abständen so zueinander positioniert sind, dass Strahlen aus einem gemeinsamen Punkt der Brennebene 27, insbesondere dem Brennpunkt der Brennebene 27, des Objektivs 3 auf einen Punkt der Detektorfläche 29 abgebildet werden, erfolgt in dem Fall, dass sich die Grenzfläche bzw. Oberfläche 59 des Biochips 45 in der Fokussierungsebene 27 befindet allerdings keine genaue Abbildung einer Reflexion des Laserstrahlpunktes auf einen genauen Punkt der Detektorfläche. Allerdings existiert eine weitere Reflektionsebene 27c zwischen der Brennebene 27 und der Fokussierungsebene 27b, an welcher die Grenzfläche bzw. die Oberfläche 59 des Biochips 45 eine solche Reflexion des Laserstrahls bewirkt, so dass diese Reflexion ebenfalls auf einen Punkt auf der Detektorebene 29 punktartig abgebildet wird.

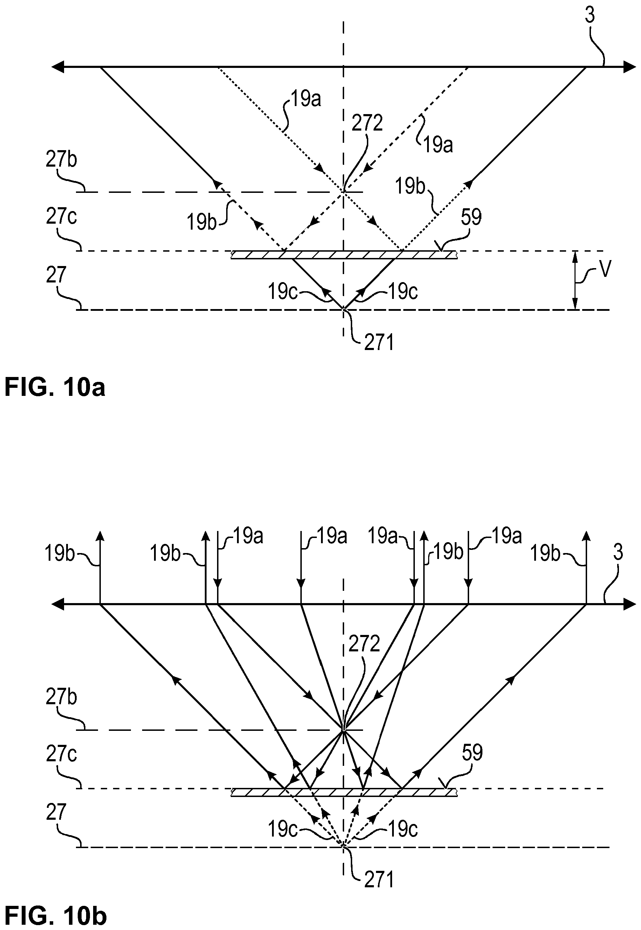

Die Figuren 10a und 10 b zeigen hierzu im Detail die optische Öffnung des Objektivs 3, die Brennebene 27 mit dem Brennpunkt 271 des Objektivs sowie die Fokussierungsebene 27b des Laserstrahls mit dem Fokussierungspunkt 272. Die weitere Reflektionsebene 27c liegt zwischen der Brennebene 27 und der Fokussierungsebene 27b. Es sei angenommen, dass die Grenzfläche bzw. die Oberfläche 59 des Biochips sich an der weiteren Reflektionsebene 27c befindet. Eintreffende Laserstrahlen 19a werden tatsächlich an der weiteren Reflektionsebene 27c reflektiert und als reflektierte Laserstrahlen 19b zurück zum Objektiv geleitet. Diese Laserstrahlen 19b treten unter einem solchen Winkel in das Objektiv 3 ein, wie sie dies auch dann tun würden, wenn sie nicht in der weiteren Reflektionsebene 27c sondern in der korrekten Brennebene 27 reflektiert worden wären; mit anderen Worten: die Laserstrahlen 19a werden derart an der Probengrenzfläche in der weiteren Reflektionsebene 27c reflektiert, dass die rückläufigen Laserstrahlen 19b scheinbar wie Strahlen 19c aus einem gemeinsamen Punkt 271 der Brennebene 27, insbesondere dem Brennpunkt 271 der Brennebene 27, des Objektivs 3 kommen. Daher erfolgt dann für diese in der weiteren Reflektionsebene 27c reflektierten Laserstrahlen 19b auch eine korrekte, punktförmige Abbildung auf einen Punkt der Detektorebene 27 aus Figur 9.

Der Abstand bzw. die Verschiebung V zwischen der weiteren Reflektionsebene 27c und der tatsächlichen Brennebene 27 kann mit Hilfe einer im Mikroskop verbauten Referenzprobe für Kalibrationszwecke vorab ermittelt werden, so dass ein Vorgabewert in dem Prozessor 33 abgespeichert werden kann, welcher später in die Ausführungsform des Verfahrens eingehen kann.

Die Figur 10b illustriert den Effekt der weiteren Reflektionsebene noch einmal für weitere Strahlengänge, 19a, 19b, 19c. Im Folgenden wird nun beschrieben, wie dieser anhand der Figuren 10 a und b erläuterte Effekt der Verschiebung des Fokuspunktes für eine Vermeidung des Umkehrspiels ausgenutzt werden kann.

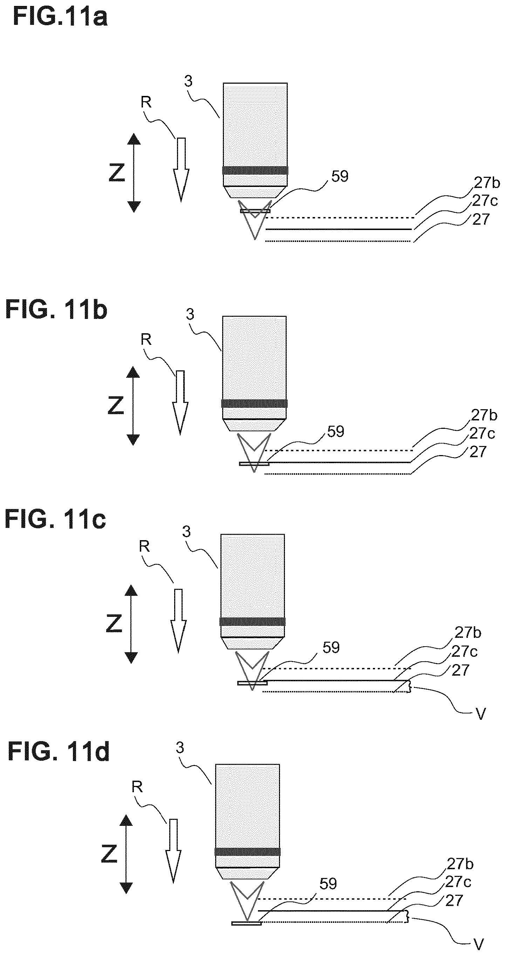

Es sei angenommen, dass zunächst, wie zuvor erläutert, ein relatives Verfahren des Objektivs und des Probenbereichs zueinander mittels Verringern eines Relativabstandes ausgehend von einem größten Abstand hin zu einem kleinsten Abstand unter Verwendung einer ersten Abstandsauflösung erfolgt sei, sodass der genannte Verlauf der höchsten Intensitätswerte mehrere Maxima aufweist, wie in Figur 5 illustriert. Es sei dann ferner angenommen, dass ein Bestimmen der Bezugsrelativverfahrposition auf Basis der mehreren Maxima als eine erste Bezugsrelativverfahrposition erfolgt ist. Es sei ferner angenommen, dass die Oberfläche 59 des Biochips als Grenzfläche sich dann zwischen der Fokusebene 27b des Laserstahls und dem Objektiv 3 befindet, wie in der Figur 11a illustriert. Erfolgt nun ein Vergrößern des Relativabstandes zwischen Objektiv 3 und Probenbereich bzw. zwischen Objektiv 3 und der Oberfläche 59 des Biochips hin zu der ersten Bezugsrelativverfahrensposition in einer Verfahrensrichtung R mit einer zweiten Abstandsauflösung, welche höher ist als die erste Abstandsauflösung, und erfolgt gleichzeitig ein Erfassen von weiteren höchsten Intensitätswerten an den jeweiligen, weiteren Relativverfahrenspositionen, so kann angenommen werden, dass die in der Figur 6 illustrierte Kurve 81 von weiteren Intensitätswerten von rechts her in Richtung des Maximums 82 abgefahren wird. Es sei

Befindet sich dann, wie in Figur 11b illustriert, die Oberfläche 59 des Biochips genau in der weiteren Reflektionsebene 27c, so ergibt sich in dem Verlauf 81 der Kurve der Maximumwert 82 an der Position 85. Es wird dann das Objektiv relativ zum Probenbereich (oder umgekehrt) um eine weitere zweite Auflösungsgenauigkeit bzw. einen zweiten Auflösungsgenauigkeitsschrittes so verfahren, dass die Distanz zwischen Objektiv 3 und Probenbereich weiter vergrößert wird. Die Verfahrrichtung ist als Richtung R eingezeichnet.

Befindet sich die Oberfläche 59 des Biochips in der in Figur 11b illustrierten Position, also in der weiteren Reflektionsebene 27c, so ergibt sich der Maximalwert 82 der Position 85. Befindet sich die Oberfläche 59 des Biochips in der in Figur 11c illustrierten Position, also unterhalb der weiteren Reflektionsebene 27c, so ergibt sich ein gegenüber dem Maximalwert 82 geringerer Wert 82a an der Position 85a. Es kann dann also anhand der weiteren höchsten Intensitätswerte des Verlaufs 81 detektiert werden, dass in der zuvorigen Position 85 das lokale Maximum 82 vorlag. Es muss nun vorzugsweise nur noch aus der Position 85a, welche zu der Figur 11c korrespondiert, der Relativabstand zwischen dem Probenbereich bzw. der Oberfläche 59 des Biochips und dem Objektiv um einen vorbestimmten Vorgabewert an die finale Bezugsrelativverfahrensposition 85f, welche zu der Figur 11d mit dem Probenbereich bzw. der Oberfläche 59 des Biochips in der Brennebene korrespondiert, um einen Vorgabewert vergrößert werden. Diese Vergrößerung bzw. dieser Vorgabewert wird korrespondierend zu dem Versatz V zwischen der Brennebene 27 und der weiteren Reflektionsebene 27c abzüglich eines zweiten Auflösungsgenauigkeitsschrittes, um welchen ja der Probenbereich bzw. die Oberfläche 59 des Biochips bereits von der Position der Figur 11b zu der Position der Figur 11c verschoben wurde, gewählt. Dieses weitere Vergrößern erfolgt in der gleichen Richtung R ohne eine Richtungsumkehr. Hierdurch wird es also vermieden, nach Detektion des Maximums 82 (Figur 6) mittels Verfahren des Probenbereiches bzw. der Oberfläche 59 des Biochips von der Position 85a zu der Position 85f eine Richtungsumkehr erfolgen muss, so dass eben auch eine Ungenauigkeit aufgrund des Umkehrspiels der Mechanik des Antriebes 15 (Figur 1) vermieden wird. Ohne den Versatz V zwischen der Brennebene und der Fokussierungsebene müsste eine Richtungsumkehr von der Position 85a hin zu der Position 85 erfolgen, so dass ein Umkehrspiel sich negativ hinsichtlich der Positionierung des Probenbereiches und somit auch hinsichtlich des Fokussierungsergebnisses auswirken würde.

Da die Messwerte bzw. die weiteren höchsten Intensitätswerte der Kurve 81 auch von Schwankungen und Rauschen überlagert sein können, wird zum Auffinden des Maximums 82 und der finalen Bezugsrelativverfahrensposition vorzugsweise wie im Weiteren beschrieben verfahren. Zunächst erfolgt ein Abfahren der Kurve 81 von rechts nach links her unter Verwendung der zweiten Abstandsauflösung. Wird dann von einem vorigen Wert 82c der Position 85c bzw. einem aktuellen Maximum 85c hin zu einem aktuellen Wert 82d der Position 85d ein Abnehmen aufeinanderfolgender Werte festgestellt, so wird innerhalb eines folgenden Positionsfensters nach links hin überprüft, ob ein weiterer Wert gefunden werden kann, welcher größer als das bisher detektierte, aktuelle Maximum 82c ist. Es sei angenommen, dass dies der Fall ist, da eine Anwendung des illustrierten Fenster FE von der Position 85c aus nach links hin dazu führen würde, dass Werte größer als der Wert 82c aufgefunden werden würden. Wird dann später das Maximum 82 an der Position 85 aufgefunden, so wird zwar an der Position 85a der geringere Wert 82a aufgefunden, jedoch innerhalb des Fensters FE nach links hin kein Wert, der größer als das aktuelle Maximum 82 ist. Es befindet sich dann der Probenbereich bzw. die Oberfläche 59 des Biochips and der Position 85e. Der Versatz V zwischen der Fokussierungsebene und der Brennebene kann dann entsprechend berücksichtigt werden, so dass ab der Position 85e um einen Vorgabewert bzw. Vorschub V2 der Probenbereich bzw. die Oberfläche 59 des Biochips weiter an die Position 85f als die finale Bezugsrelativverfahrposition verrfahren wird. Der Vorgabewert V2 wird vorzugsweise bestimmt gemäß V2=V-FE.

Ausführungsformen der vorliegenden Erfindung ermöglichen eine zuverlässige Fokussierung auf optische Grenzflächen, die sich innerhalb eines dreidimensionalen Probenbereichs befinden, und insbesondere Grenzflächen aufweisen, welche nicht an Luft grenzen. Laserreflexionen an Grenzflächen, die innerhalb des Probenbereichs liegen, sind prinzipiell schwächer als Laserreflexionen an der Oberfläche zu Luft. Zum Beispiel kann der Reflexionsgrad der Grenzfläche Glycerin-Biochip (das heißt der dritten Grenzfläche) bei nur 0,029% liegen. Der Reflexionsgrad der Grenzfläche Luft zu Deckglas-Oberseite kann dagegen bei ca. 4,3% liegen. Die zur Fokussierung relevante Grenzfläche liefert daher ein Signal, das um einen Faktor von ca. 150 geringer ist als das Signal der Probenoberfläche zu Luft. Aufgrund der Erkennung des charakteristischen Reflexionsmusters in Abhängigkeit der Relativverfahrposition kann dennoch eine zuverlässige Fokussierung auf die Biochip-Oberfläche erreicht werden.

Je nach bestimmten Implementierungsanforderungen können Ausführungsbeispiele der Erfindung den Prozessor und/oder die Steuereinheit in Hardware und/oder in Software umsetzen. Eine Umsetzung des hier genannten Prozessors und/oder der hier genannten Steuereinheit kann hier als wenigstens eine Einheit erfolgen oder aber durch mehrere Einheiten im Verbund. Die Implementierung kann unter Verwendung eines digitalen Speichermediums, beispielsweise einer Floppy-Disk, einer DVD, einer Blu-Ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einer programmierbaren Hardwarekomponente derart zusammenwirken können oder zusammenwirken, dass das jeweilige Verfahren durchgeführt wird. Eine programmierbare Hardwarekomponente kann als Steuereinheit durch einen Computerprozessor (CPU = Central Processing Unit), einen Computer, ein Computer-system, einen anwendungsspezifischen integrierten Schaltkreis (ASIC = Application-Specific Integrated Circuit), einen integrierten Schaltkreis (IC = Integrated Circuit), ein Ein-Chip-System (SOC = System on Chip), ein programmierbares Logikelement oder ein feldprogrammierbares Gatterarray mit einem Mikroprozessor (FPGA = Field Programmable Gate Array) gebildet sein. Das digitale Speichermedium kann daher maschinen- oder computerlesbar sein. Manche Ausführungsbeispiele umfassen also einen Datenträger, der elektronisch lesbare Steuersignale aufweist, die in der Lage sind, mit einem programmierbaren Computersystem oder einer programmierbare Hardwarekomponente derart zusammenzuwirken, dass eines der hierin beschriebenen Verfahren durchgeführt wird. Allgemein können Ausführungsbeispiele oder Teile der Ausführungsbeispiele der vorliegenden Erfindung als Programm, Firmware, Computerprogramm oder Computerprogrammprodukt mit einem Programmcode oder als Daten implementiert sein, wobei der Programmcode oder die Daten dahin gehend wirksam ist bzw. sind, eines der Verfahren oder ein Teil eines Verfahrens durchzuführen, wenn das Programm auf einem Prozessor oder einer programmierbaren Hardwarekomponente abläuft.

**Patentansprüche**

1. Verfahren zum Aufnehmen eines Bildes eines Probenbereichs (2), aufweisend:

Richten eines Laserstrahls (19, 19a) mittels wenigstens eines Objektivs (3) auf den Probenbereich (2), der mindestens eine Grenzfläche (59), enthält, wobei das Objektiv eine Abbildung des Laserstrahls auf einen Fokussierungspunkt bewirkt, welcher in einer Fokussierungsebene (27, 27b) liegt und welcher insbesondere auf der optischen Achse des Objektivs oder einer dazu parallelen Achse liegt;
wobei der Laserstrahl ein zum Objektiv hin konvergentes Strahlenbündel (19a) aufweist und wobei ferner die Fokussierungsebene (27b) des Laserstrahls nicht mit der Brennebene (27) des Objektivs zusammenfällt,
ferner aufweisend
relatives Verfahren des Objektivs (3) und des Probenbereichs (2) zueinander entlang der optischen Achse (13) des Objektivs (3) an mehrere, unterschiedliche Relativverfahrpositionen;
Erfassen, für eine jeweilige Relativverfahrposition (Z), von mehreren Intensitätswerten des an der Grenzfläche (59) reflektierten und durch das Objektiv (3) tretenden Laserstrahls, die von Pixeln eines zweidimensionalen Teilbereichs (65) einer Detektionsfläche (29) einer Mikroskopkamera (8) detektiert werden;
Bestimmen, für eine jeweilige Relativverfahrposition (Z), eines jeweils höchsten Intensitätswertes der jeweils mehreren, erfassten Intensitätswerte des Teilbereichs (65);
Bestimmen eines Verlaufs (67) der höchsten Intensitätswerte durch Zuordnen des jeweils höchsten Intensitätswertes zu der jeweiligen Relativverfahrposition (Z);
**dadurch gekennzeichnet, dass** das relative Verfahren des Objektivs (3) und des Probenbereichs zueinander mittels Verringern eines Relativabstandes ausgehend von einem größten Abstand hin zu einem kleinsten Abstand unter Verwendung einer ersten Abstandsauflösung erfolgt, sodass der Verlauf mehrere Maxima (73, 75, 77) aufweist;
ferner **gekennzeichnet durch**
Bestimmen der Bezugsrelativverfahrposition (79) auf Basis der mehreren Maxima (73, 75, 77) als eine erste Bezugsrelativverfahrposition;
Vergrößern des Relativabstandes hin zu der ersten Bezugsrelativverfahrensposition mit einer zweiten Abstandsauflösung, welche höher ist als die erste Abstandsauflösung, bei gleichzeitigem Erfassen von weiteren höchsten Intensitätswerten (81) an den jeweiligen, weiteren Relativverfahrenspositionen;
Detektieren eines Vorliegens eines lokalen Maximums (82) auf Basis der weiteren höchsten Intensitätswerte (81).

abermaliges Vergrößern des Relativabstandes um einen vorbestimmten Vorgabewert an eine finale Bezugsrelativverfahrensposition (85f), Erfassen wenigstens eines Bildes des Probenbereichs an der finalen Bezugsrelativverfahrposition.

2. Verfahren nach Anspruch 1,

ferner aufweisend
Einstellen jener Relativverfahrposition als eine finale Bezugsrelativverfahrensposition, an welcher das auf Basis der weiteren höchsten Intensitätswerte (81) detektierte lokale Maximum (85) vorliegt bzw. vorlag.

3. Verfahren nach einem der vorhergehenden Ansprüche, ferner aufweisend:

Relatives Verfahren des Objektivs (3) und des Probenbereichs (2) zueinander entlang der optischen Achse (13) an jeweilige abschließende Relativverfahrpositionen oberhalb und/oder unterhalb der Bezugsrelativverfahrposition;
Erfassen jeweiliger Bilder an den jeweiligen abschließenden Relativverfahrpositionen sowie Speichern der jeweiligen Bilder;
Bestimmen jeweiliger Fokusmetriken für die jeweiligen Bilder sowie Selektieren jenes Bildes, welches die beste Fokusmetrik aufweist.

4. Verfahren gemäß Anspruch 1,
wobei ein Durchmesser des Laserstrahls (19) so dimensioniert ist, dass die volle Apertur des Objektivs (3) ausgeleuchtet wird.

5. Verfahren gemäß einem der vorangehenden Ansprüche,
wobei der Teilbereich weniger als 1/10 der Detektorfläche beträgt.

6. Verfahren gemäß einem der vorangehenden Ansprüche,
wobei in einem Detektionsstrahlengang zwischen dem Objektiv (3) und der Detektionsfläche (29) eine Linse oder ein Linsensystem (6) angeordnet ist, die bzw. das eine Brennebene (27) des Objektivs (3) auf die Detektionsfläche (29) abbildet.

7. Verfahren gemäß einem der vorangehenden Ansprüche,

wobei mindestens eine Grenzfläche (57, 59) nicht an Luft angrenzt,
wobei der Probenbereich (2) eine organische Probe (51) umfasst, die auf einem Substratträger (45) aufliegt, in einer flüssigen Substanz (49) eingebettet ist und von einem Deckglas (53) abgedeckt ist,
wobei ferner die Oberseite (55) des Deckglases eine erste Grenzfläche bildet, wobei die Unterseite (57) des Deckglases eine zweite Grenzfläche bildet,
und wobei die Oberfläche (59) des Substratträgers (45) eine dritte Grenzfläche bildet.

8. Verfahren gemäß einem der vorangehenden Ansprüche,

wobei ein Relativabstand zwischen dem Objektiv (3) und dem Probenbereich (2) ausgehend von einem größten Abstand zunächst verringert wird, während Intensitätswerte der Pixel des Teilbereichs erfasst werden,
sodass der Verlauf zunächst ein erstes lokales Maximum (73), danach ein zweites lokales Maximum (75) und schließlich ein drittes lokales Maximum (77) des Verlaufs aufweist, wobei die Bezugsrelativverfahrposition (79) auf Basis des dritten Maximums (77) bestimmt wird.

9. Verfahren gemäß einem der Ansprüche 5 oder 6,

wobei die Bezugsrelativverfahrposition derjenigen Relativverfahrposition (79) entspricht, für die der an der dritten Grenzfläche reflektierte Laserstrahl fokussiert auf den Teilbereich (65) der Detektionsfläche (29) abgebildet wird,
wobei die Bezugsrelativverfahrposition (79) zum Aufnehmen des Bildes auf Basis eines Vorgabewertes verändert bzw. korrigiert wird.

10. Verfahren gemäß einem der vorangehenden Ansprüche, wobei zwischen einer Quelle (10) des Laserstrahls (19) und dem Objektiv (3) zum Reflektieren des Laserstrahls (19) durch das Objektivs hindurch ein dichroitischer oder nicht dichroitischer Strahlteiler (11, 11a, 11b) angeordnet ist.

11. Verfahren gemäß dem vorangehenden Anspruch, wobei der Strahlteiler (11b) eine Keilform aufweist, wobei sich Ebenen einer Vorderseite (91) und Rückseite (93) des Strahlteilers (11b) unter einem Keilwinkel ($\alpha$) schneiden,

wobei der Keilwinkel ($\alpha$) derart gewählt ist, dass das Interferenzmuster, das sich aus der Überlagerung der Reflexionen an Vorderseite und Rückseite des Strahlteilers ergibt über die volle Apertur des Objektivs mindestens 10 Maxima bzw. Minima ausweist,
oder
wobei durch mindestens ein zusätzliches optisches Element die durch den, eine Keilform aufweisenden, Strahlteiler verursachten Abbildungsfehler korrigiert werden.

**12.** Mikroskopiesystem (100) zum Aufnehmen eines Bildes eines Probenbereichs (2), aufweisend:

eine Laserquelle (10), die ausgebildet ist, einen Laserstrahl (19, 19a) zu erzeugen, wenigstens ein Objektiv (3),

- das ausgebildet ist, den Laserstrahl (19, 19a) auf den Probenbereich (2) zu richten, der mindestens eine Grenzfläche (59) enthält, wobei das Objektiv (3) eine Abbildung des Laserstrahls (19, 19a) auf einen Fokussierungspunkt bewirkt, welcher in einer Fokussierungsebene (27, 27b) liegt und welcher auf der optischen Achse des Objektivs (3) oder einer dazu parallelen Achse liegt, wobei der Laserstrahl ein zum Objektiv hin konvergentes Strahlenbündel (19a) aufweist und wobei ferner die Fokussierungsebene (27b) des Laserstrahls nicht mit der Brennebene (27) des Objektivs zusammenfällt,
- und das entlang der optischen Achse relativ zu dem Probenbereich (2) an mehrere, unterschiedliche Relativverfahrpositionen verfahrbar ist;

ferner aufweisend wenigstens eine Mikroskopkamera (8) mit einer Detektionsfläche (29), wobei die Mikroskopkamera ausgebildet ist, für eine jeweilige Relativverfahrposition (Z) mehrere Intensitätswerte des an der Grenzfläche (59) reflektierten und durch das Objektiv tretenden Laserstrahls zu erfassen, wobei die Intensitätswerte von Pixeln eines zweidimensionalen Teilbereichs (65) einer Detektionsfläche (29) einer Mikroskopkamera (8) detektiert werden; sowie ferner aufweisend wenigstens einen Prozessor (33), der ausgebildet ist,

- für eine jeweilige Relativverfahrposition einen jeweils höchsten Intensitätswert der erfassten Intensitätswerte des Teilbereichs (65) zu bestimmen,
- einen Verlauf (81) der höchsten Intensitätswerte durch Zuordnen des jeweils höchsten Intensitätswertes zu der jeweiligen Relativverfahrposition (Z) zu bestimmen,

**dadurch gekennzeichnet, dass** der Prozessor ausgebildet ist, ein Antriebsmittel (15) zum Ändern der Relativverfahrposition so anzusteuern, dass das relative Verfahren des Objektivs (3) und des Probenbereichs zueinander mittels Verringern eines Relativabstandes ausgehend von einem größten Abstand hin zu einem kleinsten Abstand unter Verwendung einer ersten Abstandsauflösung erfolgt, sodass der Verlauf mehrere Maxima (73, 75, 77) aufweist; ferner **dadurch gekennzeichnet, dass** der Prozessor ferner ausgebildet ist,

- eine Bezugsrelativverfahrposition (79) auf Basis der mehreren Maxima (73, 75, 77) als eine erste Bezugsrelativverfahrposition zu bestimmen;
- das Antriebsmittel (15) zum Ändern der Relativverfahrposition so anzusteuern, dass ein Vergrößern des Relativabstandes hin zu der ersten Bezugsrelativverfahrensposition mit einer zweiten Abstandsauflösung erfolgt, welche höher ist als die erste Abstandsauflösung, bei gleichzeitigem Erfassen von weiteren höchsten Intensitätswerten (81) an den jeweiligen, weiteren Relativverfahrenspositionen;
- ein Vorliegen eines lokalen Maximums (82) auf Basis der weiteren höchsten Intensitätswerte (81) zu detektieren,
- das Antriebsmittel (15) zu einem abermaligen Vergrößern des Relativabstandes um einen vorbestimmten Vorgabewert an eine finale Bezugsrelativverfahrensposition (85f) anzusteuern,
- sowie ferner mittels der Mikroskopkamera oder einer weiteren Mikroskopkamera ein Bild des Probenbereichs an der finalen Bezugsrelativverfahrensposition zu erfassen.

## Claims

**1.** A method for recording an image of a sample region (2), including:

directing a laser beam (19, 19a) on the sample region (2) by means of at least one objective (3), said sample region containing at least one boundary surface (59), wherein the objective effectuates imaging of the laser beam on a focusing point that is located in a focusing plane (27, 27b) and that, in particular, is located on the optical axis of the objective or an axis parallel thereto; wherein the laser beam has a bundle of rays (19a) that converges to the objective and wherein, further, the focusing plane (27b) of the laser beam does not coincide with the focal plane (27) of the objective, further including:

displacing the objective (3) and the sample region (2) in relative fashion with respect to one another along the optical axis (13) of the objective (3) to a plurality of different relative displacement positions;

capturing, for a respective relative displacement position (Z), a plurality of intensity values of the laser beam that is reflected at the boundary surface (59) and that passes through the objective (3), said intensity values being detected by pixels of a two-dimensional subarea (65) of a detection area (29) of a microscope camera (8);

determining, for a respective relative displacement position (Z), a respective highest intensity value of the respective plurality of captured intensity values of the subarea (65);

determining a profile (67) of the highest intensity values by assigning the respective highest intensity value to the respective relative displacement position (Z);

**characterized in that** displacing the objective (3) and the sample region in relative fashion with respect to one another by means of reducing a relative distance from a largest distance to a smallest distance is implemented using a first distance resolution such that the profile has a plurality of maxima (73, 75, 77);

furthermore **characterized by**

determining the reference relative displacement position (79) on the basis of the plurality of maxima (73, 75, 77) as a first reference relative displacement position;

increasing the relative distance to the first reference relative displacement position with a second distance resolution, which is higher than the first distance resolution, while simultaneously capturing further highest intensity values (81) at the respective, further relative displacement positions;

detecting a presence of a local maximum (82) on the basis of the further highest intensity values (81).

renewed increasing of the relative distance by a predetermined default value to a final reference relative displacement position (85f),

capturing at least one image of the sample region at the final reference relative displacement position.

2. The method as claimed in claim 1,

further including

setting the relative displacement position, at which the local maximum (85) detected on the basis of the further highest intensity values (81) is present or was present, as a final reference relative displacement position.

3. The method as claimed in any one of the preceding claims,

further including:

displacing the objective (3) and the sample region (2) in relative fashion with respect to one another along the optical axis (13) to respective concluding relative displacement positions above and/or below the reference relative displacement position;

capturing respective images at the respective concluding relative displacement positions and storing the respective images;

determining respective focus metrics for the respective images and selecting the image with the best focus metric.

4. The method as claimed in claim 1,

wherein a diameter of the laser beam (19) is dimensioned in such a way that the full aperture of the objective (3) is illuminated.

5. The method as claimed in any one of the preceding claims,

wherein the subarea is less than 1/10 of the detector area.

6. The method as claimed in any one of the preceding claims,

wherein a lens or a lens system (6), which images a focal plane (27) of the objective (3) on the detection area (29), is disposed in a detection beam path between the objective (3) and the detection area (29).

7. The method as claimed in any one of the preceding claims,

wherein at least one boundary surface (57, 59) does not adjoin air,

wherein the sample region (2) comprises an organic sample (51) that rests on a substrate carrier (45), that is embedded in a liquid substance (49) and that is covered by a coverslip (53),

wherein, further, the upper side (55) of the coverslip forms a first boundary surface,

wherein the lower side (57) of the coverslip forms a second boundary surface,

and wherein the surface (59) of the substrate carrier (45) forms a third boundary surface.

8. The method as claimed in any one of the preceding claims,

wherein a relative distance between the objective (3) and the sample region (2) is initially reduced proceeding from a greatest distance while intensity values of the pixels of the subarea are captured,

and so the profile initially has a first local maximum (73), followed by a second local maximum (75) and finally a third local maximum (77) of the profile, wherein the reference relative displacement position (79) is determined on the basis of the third maximum (77).

9. The method as claimed in either of claims 5 or 6,

    wherein the reference relative displacement position corresponds to that relative displacement position (79) for which the laser beam that was reflected at the third boundary surface is imaged in focus on the subarea (65) of the detection area (29),

    wherein the reference relative displacement position (79) is modified or corrected for the purposes of recording the image on the basis of a default value.

10. The method as claimed in any one of the preceding claims, wherein a dichroic or non-dichroic beam splitter (11, 11a, 11b) is disposed between a source (10) of the laser beam (19) and the objective (3), for the purposes of reflecting the laser beam (19) through the objective.

11. The method as claimed in the preceding claim, wherein the beam splitter (11b) has a wedge shape, wherein planes of a front side (91) and back side (93) of the beam splitter (11b) intersect at a wedge angle ($\alpha$),

    wherein the wedge angle ($\alpha$) is chosen such that the interference pattern arising from the superposition of the reflections at the front side and back side of the beam splitter has at least 10 maxima or minima over the full aperture of the objective,
    or
    wherein the imaging aberrations caused by the beam splitter, which has a wedge shape, are corrected by at least one additional optical element.

12. A microscopy system (100) for recording an image of a sample region (2), comprising:

    a laser source (10) that is embodied to generate a laser beam (19, 19a),
    at least one objective (3)

    - that is embodied to direct the laser beam (19, 19a) on the sample region (2) which contains at least one boundary surface (59), wherein the objective (3) effectuates imaging of the laser beam (19, 19a) on a focusing point which is located in a focusing plane (27, 27b) and which is located on the optical axis of the objective (3) or on an axis parallel thereto, wherein the laser beam has a bundle of rays (19a) that converges to the objective and wherein, further, the focusing plane (27b) of the laser beam does not coincide with the focal plane (27) of the objective,
    - and that is displaceable to a plurality of different relative displacement positions relative to the sample region (2) along the optical axis;

further including at least one microscope camera (8) with a detection area (29), wherein the microscope camera is embodied to capture, for a respective relative displacement position (Z), a plurality of intensity values of the laser beam that is reflected at the boundary surface (59) and that passes through the objective, wherein the intensity values of pixels of a two-dimensional subarea (65) of a detection area (29) of a microscope camera (8) are detected;
and further including at least one processor (33) that is embodied

    - to determine a respective highest intensity value of the captured intensity values of the subarea (65) for a respective relative displacement position,
    - to determine a profile (81) of the highest intensity values by assigning the respective highest intensity value to the respective relative displacement position (Z),

**characterized in that** the processor is embodied to actuate a drive means (15) for modifying the relative displacement position such that displacing the objective and the sample region in relative fashion with respect to one another by means of reducing a relative distance between the objective and the sample region from a largest distance to a smallest distance is implemented using a first distance resolution, so that the profile has a plurality of maxima (73, 75, 77);

    - furthermore **characterized in that** the processor is embodied to determine a reference relative displacement position (79) on the basis of the plurality of maxima (73, 75, 77) as a first reference relative displacement position (79),
    - to actuate the drive means (15) for modification of the relative displacement position such that an increase in the relative distance to the first reference relative displacement position is implemented with a second distance resolution, which is higher than the first distance resolution, at the same time capturing further highest intensity values (81) at the respective, further relative displacement positions;

- to detect a local maximum (82) being present on the basis of the further highest intensity values (81)

- to actuate the drive means (15) to a renewed increasing of the relative distance by a predetermined default value to a final reference relative displacement position (85f),

- and further to capture an image of the sample region at the final reference relative displacement position by means of the microscope camera or a further microscope camera.

## Revendications

1. Procédé d'acquisition d'une image d'une zone d'échantillon (2), ledit procédé comportant les étapes suivantes :

diriger un rayon laser (19, 19a) au moyen d'au moins un objectif (3) sur la zone d'échantillon (2) qui contient au moins une interface (59), l'objectif reproduisant le rayon laser sur un point de focalisation qui est situé dans un plan de focalisation (27, 27b) et qui est situé en particulier sur l'axe optique de l'objectif ou sur un axe parallèle à celui-ci ;
le rayon laser comportant un faisceau de rayons (19a) qui converge vers l'objectif et de plus le plan de focalisation (27b) du rayon laser ne coïncidant pas avec le plan focal (27) de l'objectif, ledit procédé comportant en outre les étapes suivantes :

effectuer un déplacement relatif de l'objectif (3) et de la zone d'échantillon (2) l'un par rapport à l'autre le long de l'axe optique (13) de l'objectif (3) vers plusieurs positions de déplacement relatif différentes ;
détecter, pour une position de déplacement relatif (Z) respective, plusieurs valeurs d'intensité du rayon laser réfléchi au niveau de l'interface (59) et passant à travers l'objectif (3), lesquelles sont détectées par des pixels d'une sous-zone bidimensionnelle (65) d'une surface de détection (29) d'une caméra de microscope (8) ;
déterminer, pour une position de déplacement relatif respective (Z), une valeur d'intensité la plus élevée respective parmi plusieurs valeurs d'intensité détectées de la sous-zone (65) ;
déterminer une évolution (67) des valeurs d'intensité les plus élevées par association de la valeur d'intensité la plus élevée respective à la position de déplacement relatif respective (Z) ;
**caractérisé en ce que** le déplacement relatif de l'objectif (3) et de la zone d'échantillon l'un par rapport à l'autre est effectué par réduction d'une distance relative allant d'une distance la plus grande à une distance la plus petite à l'aide d'une première résolution de distance de sorte que l'évolution présente plusieurs maxima (73, 75, 77), **caractérisé en outre par** les étapes suivantes

déterminer la position de déplacement relatif de référence (79) sur la base des plusieurs maxima (73, 75, 77) en tant que première position de déplacement relatif de référence ;
augmenter la distance relative vers la première position de déplacement relatif de référence avec une deuxième résolution de distance qui est supérieure à la première résolution de distance, pendant la détection simultanée d'autres valeurs d'intensité les plus élevées (81) au niveau des autres positions de déplacement relatif respectives ;
détecter la présence d'un maximum local (82) sur la base des autres valeurs d'intensité les plus élevées (81),
augmenter à nouveau la distance relative d'une valeur par défaut prédéterminée jusqu'à une position de déplacement relatif de référence finale (85f),
acquérir au moins une image de la zone d'échantillon à la position de déplacement relatif de référence finale.

2. Procédé selon la revendication 1,

comportant en outre l'étape suivante
régler cette position de déplacement relatif comme position de déplacement relatif de référence finale à laquelle le maximum local (85), détecté sur la base des autres valeurs d'intensité les plus élevées (81), est ou était présent.

3. Procédé selon l'une des revendications précédentes,
comportant en outre les étapes suivantes :

effectuer un déplacement relatif de l'objectif (3) et de la zone d'échantillon (2) l'un par rapport à l'autre le long de l'axe optique (13) jusqu'à des positions de déplacement relatif finales respectives au-dessus et/ou au-dessous de la position de déplacement relatif de référence ;
acquérir des images respectives aux positions de déplacement relatif finales respectives et mémoriser les images respectives ;

déterminer des métriques de focalisation respectives pour les images respectives et sélectionner l'image qui présente la meilleure métrique de focalisation.

4.  Procédé selon la revendication 1,
    le diamètre du rayon laser (19) étant dimensionné de telle sorte que la pleine ouverture de l'objectif (3) soit éclairée.

5.  Procédé selon l'une des revendications précédentes,
    la sous-zone étant inférieure à 1/10 de la surface du détecteur.

6.  Procédé selon l'une des revendications précédentes,
    une lentille ou un système de lentilles (6), qui reproduit un plan focal (27) de l'objectif (3) sur la surface de détection (29), étant disposé dans un trajet de rayons de détection entre l'objectif (3) et la surface de détection (29).

7.  Procédé selon l'une des revendications précédentes,

    au moins une interface (57, 59) n'étant pas adjacente à l'air,
    la zone d'échantillon (2) comprenant un échantillon organique (51) qui repose sur un support de substrat (45), qui est noyé dans une substance liquide (49) et qui est recouvert d'une lamelle (53),
    le côté supérieur (55) de la lamelle formant également une première interface, le côté inférieur (57) de la lamelle formant une deuxième interface,
    et la surface (59) du support de substrat (45) formant une troisième interface.

8.  Procédé selon l'une des revendications précédentes,

    une distance relative entre l'objectif (3) et la zone d'échantillon (2) étant d'abord réduite à partir d'une distance la plus grande tandis que les valeurs d'intensité des pixels de la sous-zone sont détectées,
    de sorte que l'évolution présente d'abord un premier maximum local (73), puis un deuxième maximum local (75) et enfin un troisième maximum local (77) de l'évolution, la position de déplacement relatif de référence (79) étant déterminée sur la base du troisième maximum (77).

9.  Procédé selon l'une des revendications 5 ou 6,

la position de déplacement relatif de référence correspondant à la position de déplacement relatif (79) pour laquelle le rayon laser, réfléchi au niveau de la troisième interface, est reproduit de manière focalisée sur la sous-zone (65) de la surface de détection (29),
la position de déplacement relatif de référence (79) étant modifiée ou corrigée sur la base d'une valeur par défaut afin d'acquérir l'image.

10. Procédé selon l'une des revendications précédentes, un séparateur de rayons dichroïque ou non dichroïque (11, 11a, 11b) étant disposé entre une source (10) du rayon laser (19) et l'objectif (3) afin de réfléchir le rayon laser (19) à travers l'objectif.

11. Procédé selon la revendication précédente, le séparateur de rayons (11b) ayant une forme en coin, les plans d'un côté avant (91) et d'un côté arrière (93) du séparateur de rayon (11b) se coupant suivant un angle en coin ($\alpha$),

    l'angle de coin ($\alpha$) étant choisi de telle sorte que le motif d'interférence, qui résulte de la superposition des réflexions au niveau du côté avant et du côté arrière du séparateur de rayons, présente au moins 10 maxima ou minima sur toute l'ouverture de l'objectif,
    ou
    les erreurs de reproduction dues au séparateur de rayons ayant une forme de coin étant corrigées par au moins un élément optique supplémentaire.

12. Système de microscopie (100) destiné à acquérir une image d'une zone d'échantillon (2), ledit système comportant :

    une source laser (10) qui est conçue pour générer un rayon laser (19, 19a),
    au moins un objectif (3),

      - qui est conçu pour diriger le rayon laser (19, 19a) sur la zone d'échantillon (2) qui contient au moins une interface (59), l'objectif (3) reproduisant le rayon laser (19, 19a) sur un point de focalisation qui est situé dans un plan de focalisation (27, 27b) et qui est situé sur l'axe optique de l'objectif (3) ou sur un axe parallèle à celui-ci, le rayon laser comportant un faisceau de rayons (19a) qui converge vers l'objectif et en outre le plan de focalisation (27b) du rayon laser ne coïncidant pas avec le plan focal (27) de l'objectif,
      - et qui peut être déplacé le long de l'axe optique par rapport à la zone d'échantillon (2) vers plusieurs positions de déplacement relatif différentes ;

ledit système comportant en outre au moins une caméra de microscope (8) pourvue d'une surface de détection (29), la caméra de microscope étant conçue pour détecter plusieurs valeurs d'intensité du rayon laser, réfléchi au niveau de l'interface (59) et passant à travers l'objectif, pour une position de déplacement relatif respective (Z), les valeurs d'intensité de pixels d'une sous-zone bidimensionnelle (65) d'une surface de détection (29) d'une caméra de microscope (8) étant détectées ;
et ledit système comprenant en outre au moins un processeur (33) qui est conçu pour

- déterminer une valeur d'intensité la plus élevée parmi les valeurs d'intensité détectées de la sous-zone (65) pour une position de déplacement relatif respective,
- déterminer une évolution (81) des valeurs d'intensité les plus élevées par association de la valeur d'intensité la plus élevée à la position de déplacement relatif respective (Z),

**caractérisé en ce que** le processeur est conçu pour commander un moyen d'entraînement (15) afin de modifier la position de déplacement relatif de telle sorte que le déplacement relatif de l'objectif (3) et de la zone d'échantillon l'un par rapport à l'autre soit effectué par réduction d'une distance relative à partir de la distance la plus grande jusqu'à la distance la plus petite à l'aide d'une première résolution de distance de telle sorte que l'évolution présente plusieurs maxima (73, 75, 77) ;
**caractérisé en outre en ce que** le processeur est en outre conçu pour

- déterminer une position de déplacement relatif de référence (79) sur la base des plusieurs maxima (73, 75, 77) en tant que première position de déplacement relatif de référence ;
- commander le moyen d'entraînement (15) afin de modifier la position de déplacement relatif de telle sorte que la distance relative par rapport à la première position de déplacement relatif de référence soit augmentée avec une deuxième résolution de distance, qui est supérieure à la première résolution de distance, lors de la détection simultanée d'autres valeurs d'intensité les plus élevées (81) au niveau des autres positions de déplacement relatif respectives ;
- détecter la présence d'un maximum local (82) sur la base des autres valeurs d'intensité les plus élevées (81),
- commander le moyen d'entraînement (15) afin d'augmenter à nouveau la distance relative d'une valeur par défaut prédéterminée jusqu'à une position de déplacement relatif de référence finale (85f),
- et en outre acquérir une image de la zone d'échantillon à la position de déplacement relatif de référence finale à l'aide de la caméra de microscope ou d'une autre caméra de microscope.

**FIG. 1**

**FIG. 2**

## FIG. 3

63

## FIG. 4a   FIG. 4b   FIG. 4c   FIG. 4d

65b

65c

66

65a

Z = -0,5 μm
$G_{max}$=153

Z = 0 μm
$G_{max}$=223

Z = +0,5 μm
$G_{max}$=58

FIG. 5

FIG. 6

**FIG. 7**

**FIG. 8**

FIG. 9

**FIG. 10a**

**FIG. 10b**

## FIG.11a

## FIG. 11b

## FIG. 11c

## FIG. 11d

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008015885 A1
- WO 2016133787 A1
- DE 102014002584
- US 20170090176 A1